(19) Europäisches Patentamt
European Patent Office
Office européen des brevets

(11) EP 1 215 270 B1

(12) EUROPÄISCHE PATENTSCHRIFT

(45) Veröffentlichungstag und Bekanntmachung des Hinweises auf die Patenterteilung:
**01.09.2004 Patentblatt 2004/36**

(51) Int Cl.[7]: **C09K 19/46**, C09K 19/16, C09K 19/30

(21) Anmeldenummer: **01127805.8**

(22) Anmeldetag: **22.11.2001**

(54) **Nematische Flüssigkristallmischung und diese enthaltende Anzeigen**

Nematic liquid crystal mixture and displays comprising the same

Mélange liquide cristallin et dispositifs le contenant

(84) Benannte Vertragsstaaten:
**AT BE CH CY DE DK ES FI FR GB GR IE IT LI LU MC NL PT SE TR**

(30) Priorität: **16.12.2000 DE 10062986**

(43) Veröffentlichungstag der Anmeldung:
**19.06.2002 Patentblatt 2002/25**

(73) Patentinhaber: **MERCK PATENT GmbH**
**64293 Darmstadt (DE)**

(72) Erfinder:
- **Hirschmann, Harald, Dr.**
  **64291 Darmstadt (DE)**
- **Schüpfer, Sven**
  **63741 Aschaffenburg (DE)**
- **Reiffenrath, Volker**
  **64380 Rossdorf (DE)**
- **Schoen, Sabine, Dr.**
  **64287 Darmstadt (DE)**

(56) Entgegenhaltungen:
**DE-A- 4 205 970** **US-A- 5 380 461**

- **DATABASE WPI Section Ch, Week 199847 Derwent Publications Ltd., London, GB; Class E19, AN 1998-551315 XP002193676 & JP 10 245557 A (SEIMI CHEM KK), 14. September 1998 (1998-09-14)**
- **DATABASE WPI Section Ch, Week 199825 Derwent Publications Ltd., London, GB; Class E14, AN 1998-275121 XP002193677 & JP 09 208958 A (SEIMI CHEM KK), 12. August 1997 (1997-08-12)**
- **DATABASE WPI Section Ch, Week 199637 Derwent Publications Ltd., London, GB; Class E19, AN 1996-368516 XP002193678 & JP 08 176547 A (ASAHI GLASS CO LTD), 9. Juli 1996 (1996-07-09)**
- **DATABASE WPI Section Ch, Week 199316 Derwent Publications Ltd., London, GB; Class E14, AN 1993-131229 XP002193679 & JP 05 070382 A (ASAHI GLASS CO LTD), 23. März 1993 (1993-03-23)**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 215 270 B1

## Beschreibung

Die Erfindung betrifft neue Flüssigkristallmischungen, ihre Verwendung in Flüssigkristallanzeigen, insbesondere in verdrillten und hochverdrillten nematischen Flüssigkristallanzeigen (englisch: Twisted Nematic, kurz: TN; bzw. Supertwisted Nematic, kurz: STN) mit sehr kurzen Schaltzeiten und guten Steilheiten und Winkelabhängigkeiten, sowie Flüssigkristallanzeigen enthaltend die neuen Mischungen.

TN-Anzeigen sind bekannt, z.B. aus M. Schadt und W. Helfrich, Appl. Phys. Lett., 18, 127 (1971). STN-Anzeigen sind bekannt, z.B. aus EP 0 131 216 B1; DE 34 23 993 A1; EP 0 098 070 A2; M. Schadt und F. Leenhouts, 17. Freiburger Arbeitstagung Flüssigkristalle (8.-10.04.87); K. Kawasaki et al., SID 87 Digest 391 (20.6); M. Schadt und F. Leenhouts, SID 87 Digest 372 (20.1); K. Katoh et al., Japanese Journal of Applied Physics, Vol. 26, No. 11, L 1784-L 1786 (1987); F. Leenhouts et al., Appl. Phys. Lett. 50 (21), 1468 (1987); H.A. van Sprang und H.G. Koopman, J. Appl. Phys. 62 (5), 1734 (1987); T.J. Scheffer und J. Nehring, Appl. Phys. Lett. 45 (10), 1021 (1984), M. Schadt und F. Leenhouts, Appl. Phys. Lett. 50 (5), 236 (1987) und E.P. Raynes, Mol. Cryst. Liq. Cryst. Letters Vol. 4 (1), pp. 1-8 (1986). Der Begriff STN umfaßt hier jedes höher verdrillte Anzeigeelement mit einem Verdrillungswinkel dem Betrage nach zwischen 160° und 360°, wie beispielsweise die Anzeigeelemente nach Waters et al. (C.M. Waters et al., Proc. Soc. Inf. Disp. (New York) (1985) (3rd Intern. Display Conference, Kobe, Japan), die STN-LCD's (DE OS 35 03 259), SBE-LCD's (T.J. Scheffer und J. Nehring, Appl. Phys. Lett. 45 (1984) 1021), OMI-LCD's (M. Schadt und F. Leenhouts, Appl. Phys. Lett. 50 (1987), 236, DST-LCD's (EP OS 0 246 842) oder BW-STN-LCD's (K. Kawasaki et al., SID 87 Digest 391 (20.6)).

STN-Anzeigen zeichnen sich im Vergleich zu Standard-TN-Anzeigen durch wesentlich bessere Steilheiten der elektrooptischen Kennlinie und, bei mittleren und höheren Multiplexraten, beispielsweise 32 bis 64 und höher, durch bessere Kontrastwerte aus. Dagegen ist in TN-Anzeigen im Allgemeinen der Kontrast aufgrund des besseren Dunkelwertes höher und die Winkelabhängigkeit des Kontrastes geringer als in STN-Anzeigen mit niedrigen Multiplexraten von beispielsweise weniger als 32.

Von besonderem Interesse sind TN- und STN-Anzeigen mit sehr kurzen Schaltzeiten insbesondere auch bei tieferen Temperaturen. Zur Erzielung von kurzen Schaltzeiten wurden bisher die Rotationsviskositäten der Flüssigkristallmischungen optimiert unter Verwendung von meist monotropen Zusätzen mit relativ hohem Dampfdruck. Die erzielten Schaltzeiten waren jedoch nicht für jede Anwendung ausreichend.

Zur Erzielung einer steilen elektrooptischen Kennlinie in den erfindungsgemäßen Anzeigen sollen die Flüssigkristallmischungen relativ große Werte für das Verhältnis der elastischen Konstanten $K_{33}/K_{11}$, sowie relativ kleine Werte für $\Delta\varepsilon/\varepsilon_{\perp}$ aufweisen, wobei $\Delta\varepsilon$ die dielektrische Anisotropie und $\varepsilon_{\perp}$ die dielektrische Konstante senkrecht zur Moleküllängsachse ist.

Über die Optimierung des Kontrastes und der Schaltzeiten hinaus werden an derartige Mischungen weitere wichtige Anforderungen gestellt:

1. Breites d/p-Fenster

2. Hohe chemische Dauerstabilität

3. Hoher elektrischer Widerstand

4. Geringe Frequenz- und Temperaturabhängigkeit der Schwellenspannung.

Die erzielten Parameterkombinationen sind bei weitem noch nicht ausreichend, insbesondere für Hochmultiplex-STN-Anzeigen (mit einer Multiplexrate im Bereich von ca. 1/400), aber auch für Mittel- und Niedermultiplex-STN- (mit Multiplexraten im Bereich von ca. 1/64 bzw. 1/16), und TN-Anzeigen. Zum Teil ist dies darauf zurückzuführen, daß die verschiedenen Anforderungen durch Materialparameter gegenläufig beeinflußt werden.

Es besteht somit immer noch ein großer Bedarf an Flüssigkristallmischungen, insbesondere für Mittel- und Niedermultiplex-STN-Anzeigen, mit sehr kurzen Schaltzeiten bei gleichzeitig großem Arbeitstemperaturbereich, hoher Kennliniensteilheit, guter Winkelabhängigkeit des Kontrastes und niedriger Schwellenspannung, die den oben angegebenen Anforderungen gerecht werden.

Der Erfindung liegt die Aufgabe zugrunde, Flüssigkristallmischungen zur Verwendung in Flüssigkristallanzeigen, insbesondere in TN- und STN-Anzeigen bereitzustellen, die die oben angegebenen Nachteile nicht oder nur in geringerem Maße und gleichzeitig kurze Schaltzeiten, insbesondere bei tiefen Temperaturen, und sehr gute Steilheiten sowie verbesserte Temperaturabhängigkeit der Betriebsspannung aufgrund einer verbesserten Frequenzabhängigkeit der Dielektrizitätskonstanten aufweisen.

Es wurde nun gefunden, daß diese Aufgabe gelöst werden kann, wenn man nematische Flüssigkristallmischungen verwendet, die eine oder mehrere Verbindungen der Formel I enthalten,

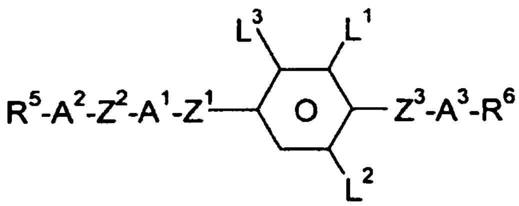

I

und mindestens eine Verbindung der Formel II und/oder II* enthalten

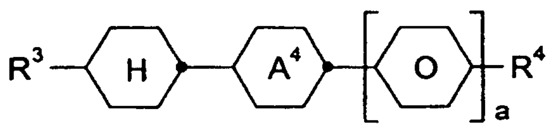

II

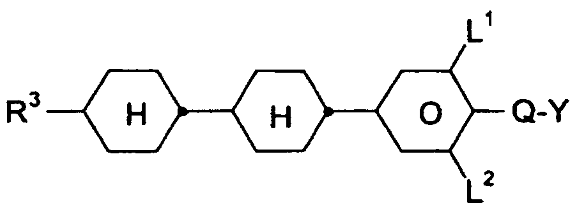

II*

worin

| | |
|---|---|
| $A^1$ | trans-1,4-Cyclohexylen, 1,4-Phenylen, 3-Fluor-1,4-phenylen oder 3,5-Difluor-1,4-phenylen, |
| $A^2$ und $A^3$ | jeweils unabhängig voneinander eine der Bedeutungen von $A^1$ oder eine Einfachbindung, |
| $A^4$ | 1,4-Phenylen oder trans-1,4-Cyclohexylen, |
| $Z^1$ | -CF=CF-, $-CR^0=CF-$ oder $-CF=CR^0-$, |
| $Z^2$ und $Z^3$ | jeweils unabhängig voneinander -O-, -COO-, -OCO-, $-CH_2O-$, $-OCH_2-$, $-CH_2CH_2-$, $-CF_2O-$, $-OCF_2-$, $-CF_2CF_2-$, -CH=CH-, -C≡C-, eine Einfachbindung oder eine der Bedeutungen von $Z^1$, |
| $R^0$ | H oder $CH_3$, |
| $R^3$ | eine Alkenylgruppe mit 2 bis 7 C-Atomen, |
| $R^4$ | eine Alkyl-, Alkoxy- oder Alkenylgruppe mit 1 bis 12 C-Atomen, wobei auch ein oder zwei nicht benachbarte $CH_2$-Gruppen durch -O-, -CH=CH-, -CO-, -OCO- oder -COO- so ersetzt sein können, daß O-Atome nicht direkt miteinander verknüpft sind, |
| $R^5$ und $R^6$ | jeweils unabhängig voneinander Alkyl, Alkoxy oder Alkenyl mit 1 bis 12 C-Atomen, wobei auch ein oder zwei nicht benachbarte $CH_2$- Gruppen durch -O-, -CH=CH-, -CO-, -OCO- oder -COO- so ersetzt sein können, daß O-Atome nicht direkt miteinander verknüpft sind, CN oder -Q-Y, |
| Q | $CF_2$, $OCF_2$, CFH, OCFH oder eine Einfachbindung, |
| Y | F oder Cl, |

$L^1$, $L^2$ und $L^3$ jeweils unabhängig voneinander H oder F, und

a 0 oder 1

bedeuten.

Die Verbindungen der Formel I erhöhen insbesondere die Doppelbrechung von TN- und STN-Mischungen bei gleichzeitiger Verringerung der Schwellenspannung, ohne dabei den Klärpunkt wesentlich zu beeinträchtigen.

Weiterhin zeichnen sich die erfindungsgemäßen Mischungen durch folgende Vorzüge aus

- sie besitzen eine niedrige Viskosität,
- sie besitzen eine niedrige Schwellenspannung und Betriebsspannung,
- sie bewirken lange Lagerzeiten in der FK-Anzeige bei tiefen Temperaturen.

Die Dokumente JP-A-10-245557, JP-A-09-208958, JP-A-08-176547, US-A-5 380 461, JP-A-05-070382 und DE-A-42 05 970 beschreiben Flüssigkristallmischungen, die Difluorstilbene oder Difluorethenylenverbindungen enthalten, sie offenbaren jedoch keine Flüssigkristallmischungen gemäß Anspruch 1 der vorliegenden Anmeldung.

Gegenstand der Anmeldung ist somit eine Flüssigkristallmischung enthaltend mindestens eine Verbindung der Formel

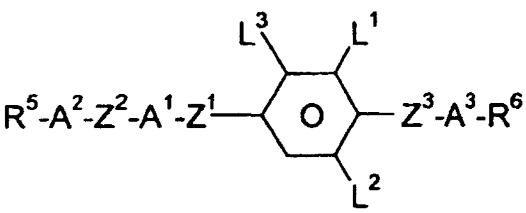

I

und mindestens eine Verbindung der Formel II und/oder II* enthalten

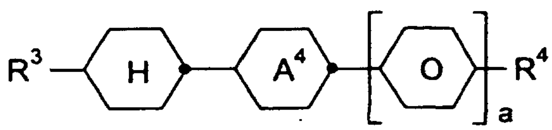

II

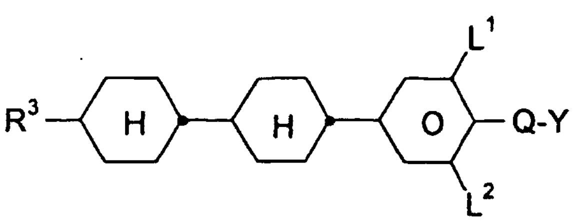

II*

worin

$A^1$ trans-1,4-Cyclohexylen, 1,4-Phenylen, 3-Fluor-1,4-phenylen oder 3,5-Difluor-1,4-phenylen,

$A^2$ und $A^3$ jeweils unabhängig voneinander eine der Bedeutungen von $A^1$ oder eine Einfachbindung,

$A^4$ 1,4-Phenylen oder trans-1,4-Cyclohexylen,

| | |
|---|---|
| $Z^1$ | $-CF{=}CF-$, $-CR^0{=}CF-$ oder $-CF{=}CR^0-$, |
| $Z^2$ und $Z^3$ | jeweils unabhängig voneinander -O-, -COO-, -OCO-, $-CH_2O-$, $-OCH_2-$, $-CH_2CH_2-$, $-CF_2O-$, $-OCF_2-$, $-CF_2CF_2-$, -CH=CH-, $-C{\equiv}C-$, eine Einfachbindung oder eine der Bedeutungen von $Z^1$, |
| $R^0$ | H oder $CH_3$, |
| $R^3$ | eine Alkenylgruppe mit 2 bis 7 C-Atomen, |
| $R^4$ | eine Alkyl, Alkoxy- oder Alkenylgruppe mit 1 bis 12 C-Atomen, wobei auch ein oder zwei nicht benachbarte $CH_2$-Gruppen durch -O-, -CH=CH-, -CO-, -OCO- oder -COO- so ersetzt sein können, daß O-Atome nicht direkt miteinander verknüpft sind, |
| $R^5$ und $R^6$ | jeweils unabhängig voneinander Alkyl, Alkoxy oder Alkenyl mit 1 bis 12 C-Atomen, wobei auch ein oder zwei nicht benachbarte $CH_2$- Gruppen durch -O-, -CH=CH-, -CO-, -OCO- oder -COO- so ersetzt sein können, daß O-Atome nicht direkt miteinander verknüpft sind, CN oder -Q-Y, |
| Q | $CF_2$, $OCF_2$, CFH, OCFH oder eine Einfachbindung, |
| Y | F oder Cl, |
| $L^1$, $L^2$ und $L^3$ | jeweils unabhängig voneinander H oder F, und |
| a | 0 oder 1 |

bedeuten.

Gegenstand der Erfindung sind auch entsprechende Flüssigkristallmischungen zur Verwendung in Flüssigkristallanzeigen, insbesondere in TN- und STN-Anzeigen, besonders bevorzugt in mittel- und niedrigmultiplexierten STN-Anzeigen.

Gegenstand der Erfindung ist auch eine Flüssigkristallanzeige mit

- zwei Trägerplatten, die mit einer Umrandung eine Zelle bilden,
- einer in der Zelle befindlichen nematischen Flüssigkristallmischung mit positiver dielektrischer Anisotropie,
- Elektrodenschichten mit Orientierungsschichten auf den Innenseiten der Trägerplatten,
- einem Anstellwinkel zwischen der Längsachse der Moleküle an der Oberfläche der Trägerplatten und den Trägerplatten von 0 Grad bis 30 Grad, und
- einem Verdrillungswinkel der Flüssigkristallmischung in der Zelle von Orientierungsschicht zu Orientierungsschicht dem Betrag nach zwischen 22,5° und 600°,
- einer nematischen Flüssigkristallmischung bestehend aus

  a) 15 - 80 Gew.% einer flüssigkristallinen Komponente A, bestehend aus einer oder mehreren Verbindungen mit einer dielektrischen Anisotropie von über +1,5;

  b) 20 - 85 Gew.% einer flüssigkristallinen Komponente B, bestehend aus einer oder mehreren Verbindungen mit einer dielektrischen Anisotropie zwischen -1,5 und +1,5;

  c) 0 - 20 Gew.% einer flüssigkristallinen Komponente D, bestehend aus einer oder mehreren Verbindungen mit einer dielektrischen Anisotropie von unter -1,5 und

  d) gegebenenfalls einer optisch aktiven Komponente C in einer Menge, daß das Verhältnis zwischen Schichtdicke (Abstand der Trägerplatten) und natürlicher Ganghöhe der chiralen nematischen Flüssigkristallmischung etwa 0,2 bis 1,3 beträgt,

dadurch gekennzeichnet, daß die Flüssigkristallmischung mindestens eine Verbindung der Formel I enthält.

Besonders bevorzugt sind Verbindungen der Formel I, worin $A^1$ 1,4-Phenylen bedeutet. Ferner bevorzugt sind Verbindungen der Formel I, worin $A^2$ und $A^3$ eine Einfachbindung bedeuten. Ferner bevorzugt sind Verbindungen der Formel I, worin einer der Reste $A^2$ und $A^3$ trans-1,4-Cyclohexylen 1,4-oder Phenylen und der andere eine Einfachbindung bedeutet, sowie Verbindungen, worin $A^2$ und $A^3$ trans-1,4-Cyclohexylen oder 1,4-Phenylen bedeuten.

Ferner bevorzugt sind Verbindungen der Formel I, worin $Z^1$ -CF=CFbedeutet, sowie solche, worin $Z^1$ -CF=CR$^0$- oder -CR$^0$=CF- und $R^0$ H bedeutet. Ferner bevorzugt sind Verbindungen der Formel I, worin $Z^2$ und $Z^3$ eine Einfachbindung bedeuten, sowie solche, worin einer oder zwei der Reste $Z^2$ und $Z^3$ -COO-, -OCO-, $-CH_2CH_2-$, $-CF_2O-$, $-OCF_2-$, $-CF_2CF_2-$,-CH=CH- oder -C≡C-, insbesondere $-CH_2CH_2-$ oder -CH=CH- bedeuten.

Ferner bevorzugt sind Verbindungen der Formel I, worin $R^5$ Alkyl oder Alkoxy mit 1 bis 8 C-Atomen oder geradkettiges 1 E- oder 3 E-Alkenyl mit 2 bis 7 C-Atomen bedeutet.

Ferner bevorzugt sind Verbindungen der Formel I, worin $R^6$ -Q-Y bedeutet, sowie solche, worin $R^5$ und $R^6$ -Q-Y bedeuten. In diesen Verbindungen ist Q-Y vorzugsweise F, Cl, $OCF_3$ oder $OCF_2H$, insbesondere F oder $OCF_3$.

Besonders bevorzugt sind Verbindungen der Formel I, worin $L^1$ und $L^2$ H bedeuten. Ferner bevorzugt sind Verbindungen, worin einer oder zwei der Reste $L^1$ und $L^2$ F bedeuten, sowie solche, worin $A^3$ 3-Fluor-1,4-Phenylen oder 3,5-Difluor-1,4-Phenylen bedeutet.

Besonders bevorzugte Verbindungen der Formel I sind ausgewählt aus den folgenden Formeln

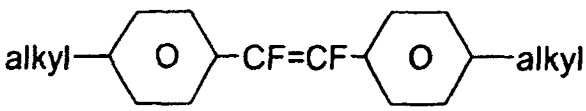

Ia

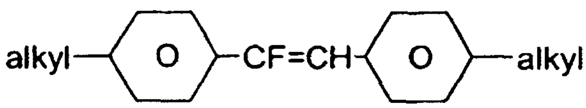

Ib

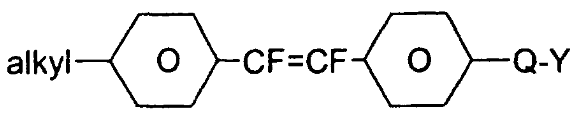

Ic

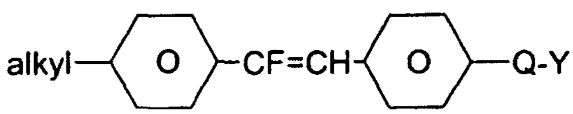

Id

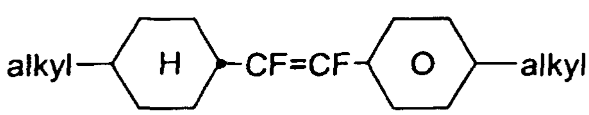

Ie

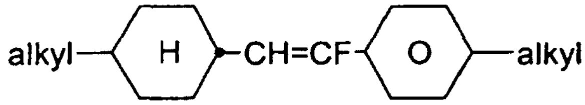

If

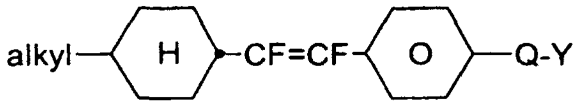

Ig

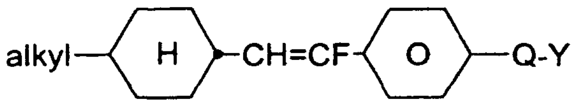

Ih

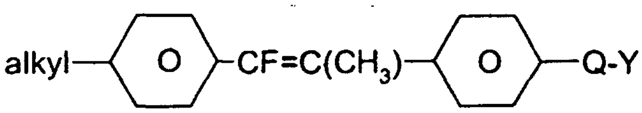

Ii

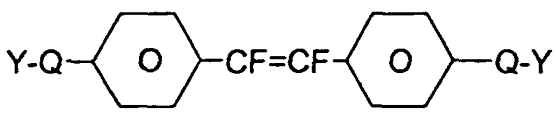

Ik

worin alkyl eine Alkylgruppe mit 1 bis 8 C-Atomen bedeutet und Q-Y die Bedeutung von Formel I besitzt, und insbesondere F oder $OCF_3$ bedeutet.

Die erfindungsgemäßen Mischungen enthalten neben den Verbindungen der Formel I vorzugsweise eine oder mehrere Alkenylverbindungen der Formel II

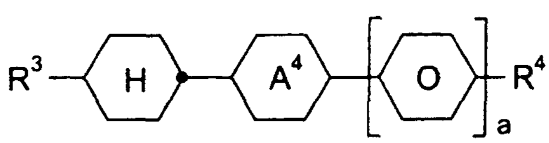

II

worin

$A^4$ 1,4-Phenylen oder trans-1,4-Cyclohexylen,

$R^3$ eine Alkenylgruppe mit 2 bis 7 C-Atomen,

$R^4$ eine Alkyl-, Alkoxy- oder Alkenylgruppe mit 1 bis 12 C-Atomen, wobei auch ein oder zwei nicht benachbarte $CH_2$-Gruppen durch -O-, -CH=CH-, -CO-, -OCO- oder -COO- so ersetzt sein können, daß O-Atome nicht direkt miteinander verknüpft sind, und

a 0 oder 1

bedeuten.

Besonders bevorzugt sind Verbindungen der Formel II, worin a 1 bedeutet.

Besonders bevorzugte Verbindungen der Formel II sind ausgewählt aus den Formeln IIa bis IIg

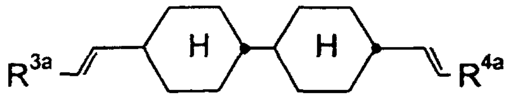

IIa

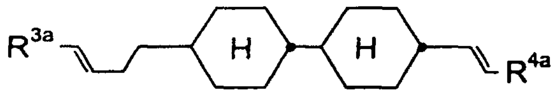

IIb

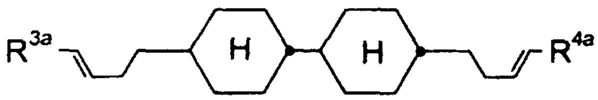

IIc

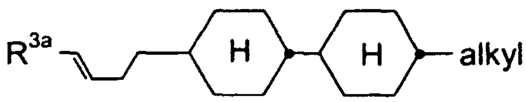

IId

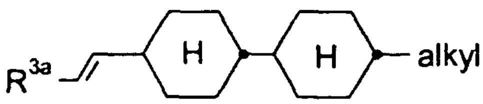

IIe

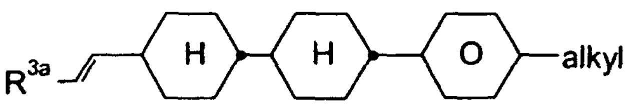

IIf

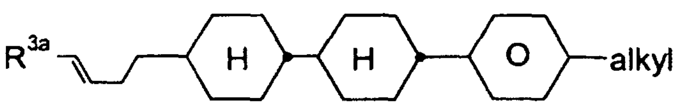

IIg

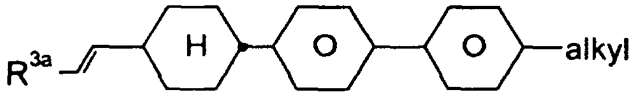

IIh

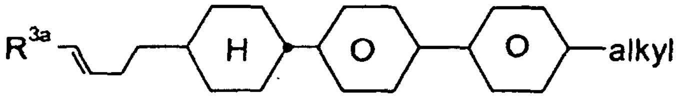

IIi

worin $R^{3a}$ und $R^{4a}$ jeweils unabhängig voneinander H, $CH_3$, $C_2H_5$ oder n-$C_3H_7$ und alkyl eine Alkylgruppe mit 1 bis 8 C-Atomen bedeuten.

Besonders bevorzugt sind Verbindungen der Formel IIa, insbesondere solche worin $R^{3a}$ und $R^{4a}$ $CH_3$ bedeuten, sowie Verbindungen der Formeln IIf, IIg, IIh und IIi, insbesondere solche worin $R^{3a}$ H oder $CH_3$ bedeutet.

Die Verwendung von Verbindungen der Formel II führt in den erfindungsgemäßen Flüssigkristallmischungen zu besonders niedrigen Werten der Rotationsviskosität und zu TN- und STN-Anzeigen mit einer hohen Steilheit und schnellen Schaltzeiten insbesondere bei niedrigen Temperaturen.

Die erfindungsgemäßen Mischungen enthalten neben den dielektrisch neutralen Alkenylverbindungen der Formel II vorzugsweise eine oder mehrere dielektrisch positive Alkenylverbindungen der Formel II*

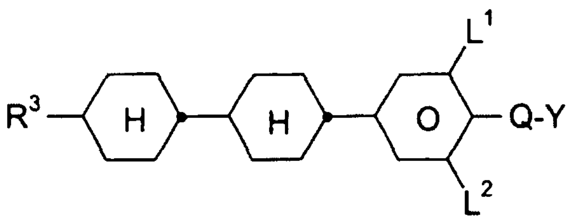

II*

worin

| | |
|---|---|
| $R^3$ | eine Alkenylgruppe mit 2 bis 7 C-Atomen, |
| Q | $CF_2$, $OCF_2$, CFH, OCFH oder eine Einfachbindung, |
| Y | F oder Cl, und |
| $L^1$ und $L^2$ | jeweils unabhängig voneinander H oder F |

bedeuten.

Besonders bevorzugte Verbindungen der Formel II* sind solche, worin $L^1$ und/oder $L^2$ F und Q-Y F oder $OCF_3$ bedeuten.

Femer bevorzugt sind Verbindungen der Formel II*, worin $R^3$ 1E-alkenyl oder 3E-alkenyl mit 2 bis 7, insbesondere 2, 3 oder 4 C-Atomen bedeutet.

Besonders bevorzugt sind Verbindungen der Formel II*a

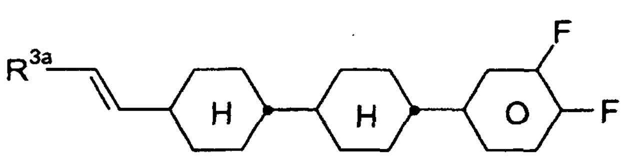

II*a

worin $R^{3a}$ H, $CH_3$, $C_2H_5$ oder n-$C_3H_7$, insbesondere H oder $CH_3$ bedeutet.

Die polaren Verbindungen der Formel II* mit einer dielektrischen Anisotropie von mehr als + 1.5 sind der oben definierten Komponente A zuzuordnen.

Die Komponente A enthält vorzugsweise eine oder mehrere Cyanoverbindungen der folgenden Formeln

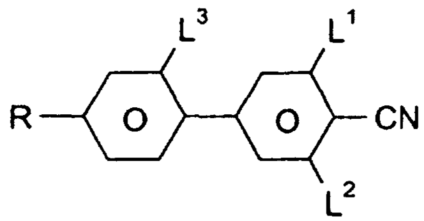

IIIa

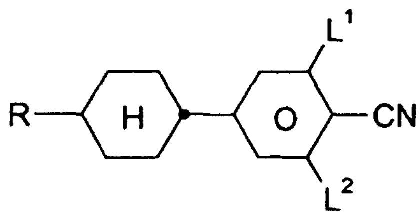

IIIb

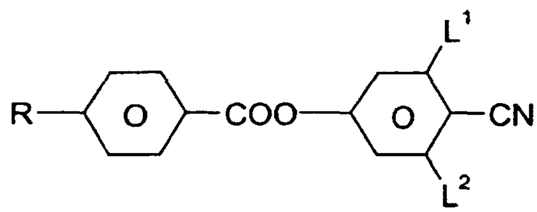

IIIc

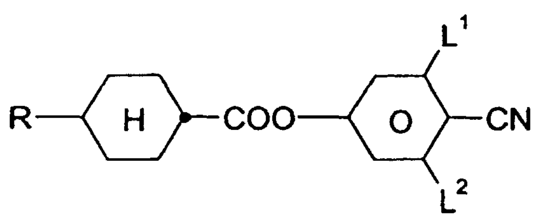

IIId

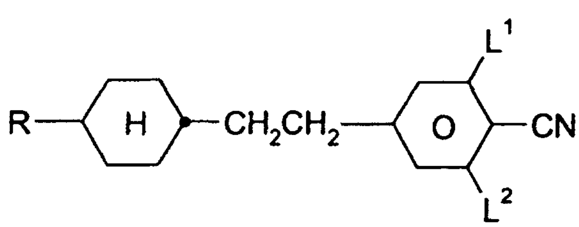

IIIe

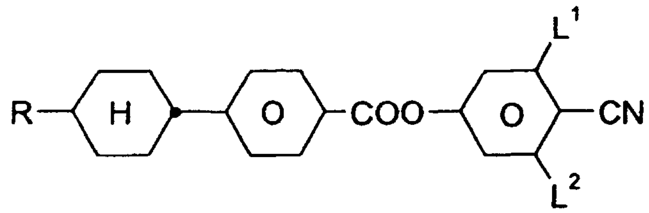

IIIf

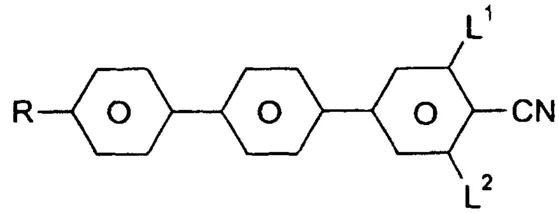

IIIg

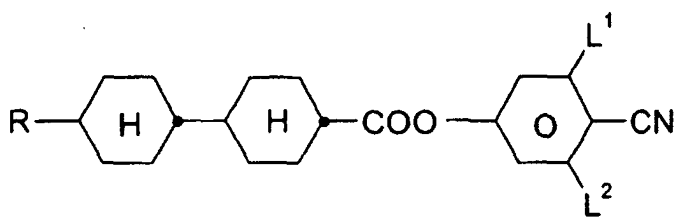

IIIh

worin

R eine Alkyl-, Alkoxy- oder Alkenylgruppe mit 1 bis 12 C-Atomen, wobei auch ein oder zwei nicht benachbarte $CH_2$-Gruppen durch -O-, -CH=CH-, -CO-, -OCO- oder -COO- so ersetzt sein können, daß O-Atome nicht direkt miteinander verknüpft sind, und

$L^1$, $L^2$ und $L^3$ jeweils unabhängig voneinander H oder F bedeuten.

R bedeutet in diesen Verbindungen besonders bevorzugt Alkyl oder Alkoxy mit 1 bis 8 C-Atomen oder Alkenyl mit 2 bis 7 C-Atomen.

Besonders bevorzugt sind Mischungen enthaltend eine oder mehrere Verbindungen der Formeln IIIb und/oder IIIc, femer IIIf, insbesondere solche worin $L^1$ und/oder $L^2$ F bedeuten.

Ganz besonders bevorzugt sind Mischungen, die eine oder mehrere Verbindungen der Formel IIIb und/oder IIIc enthalten, worin R Alkenyl mit 2 bis 7 C-Atomen bedeutet und $L^1$ und $L^2$ H oder F, vorzugsweise beide H bedeuten. Besonders bevorzugt sind Verbindungen der folgenden Formeln

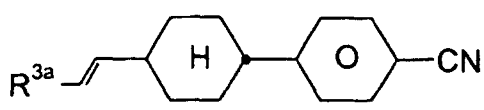

IIIb-1

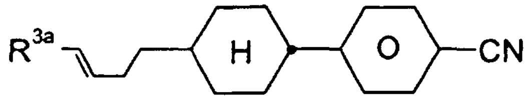

IIIb-2

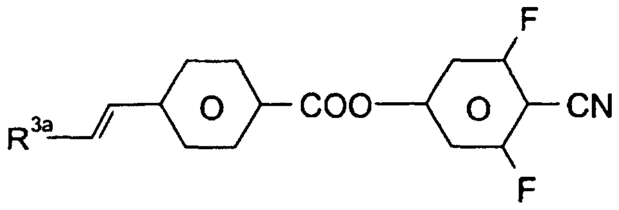

IIIc-1

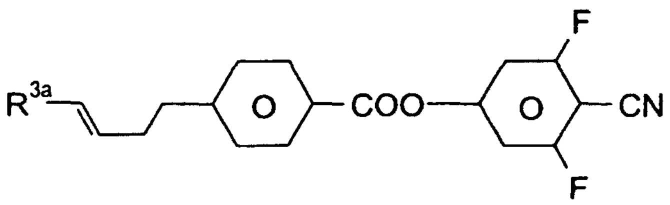

IIIc-2

worin $R^{3a}$ H, $CH_3$, $C_2H_5$ oder n-$C_3H_7$, in Formel IIIb-1 und IIIb-2 bevorzugt H oder $CH_3$, in Formel IIIc-1 und IIIc-2 bevorzugt H oder $C_2H_5$, bedeutet.

Ferner bevorzugt sind Mischungen, die eine oder mehrere Verbindungen der Formel IIIh enthalten, worin $L^2$ H und $L^1$ H oder F, insbesondere F, bedeutet.

In einer speziellen Ausführungsform enthält die Komponente A vorzugsweise eine oder mehrere 3,4,5-Trifluorphenylverbindungen der folgenden Formeln

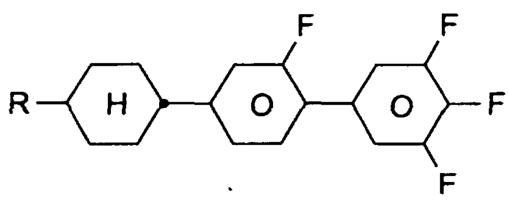

IVa

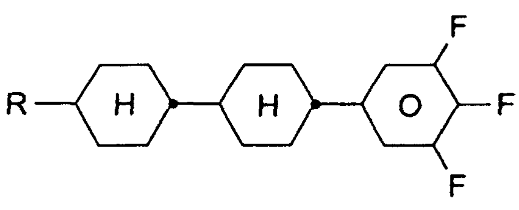

IVb

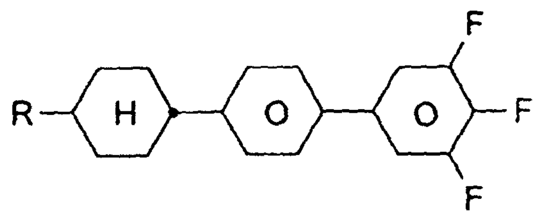

IVc

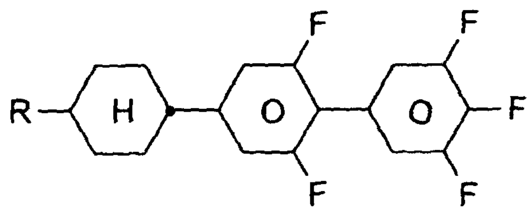

IVd

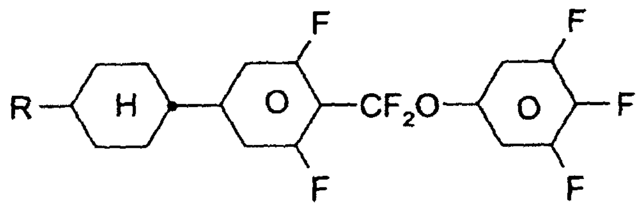

IVe

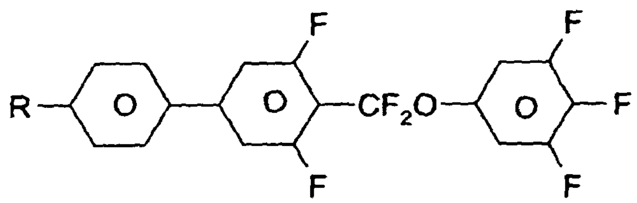

IVf

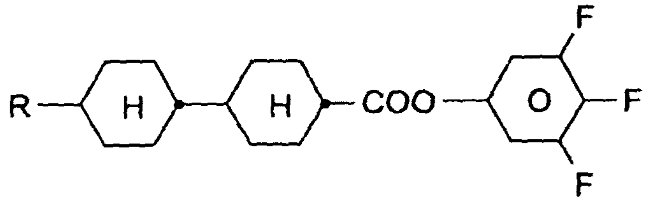

IVg

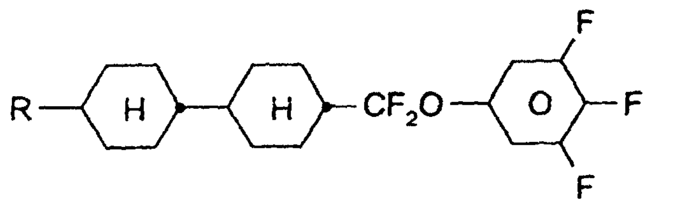
IVh

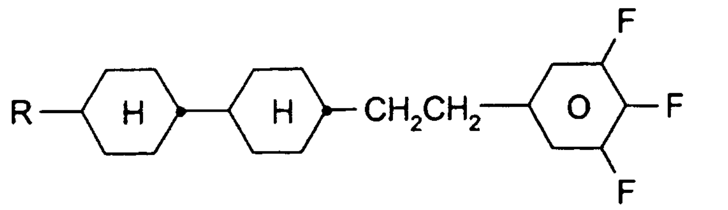
IVi

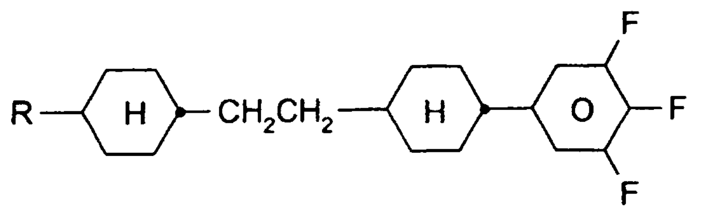
IVk

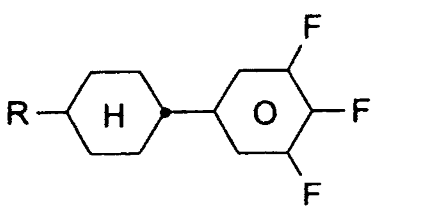
IVm

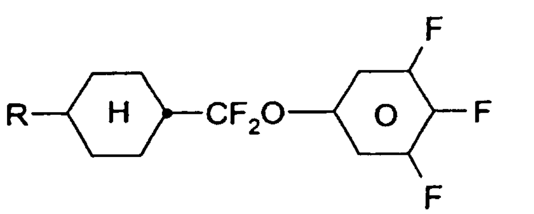
IVn

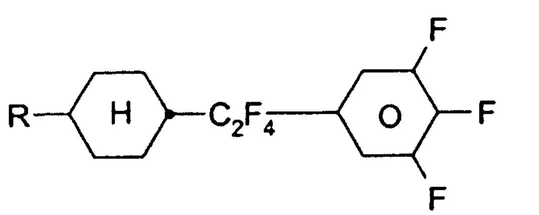
IVo

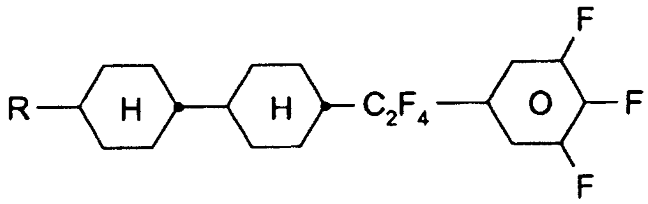

IVp

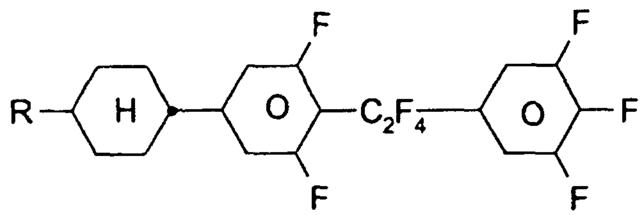

IVq

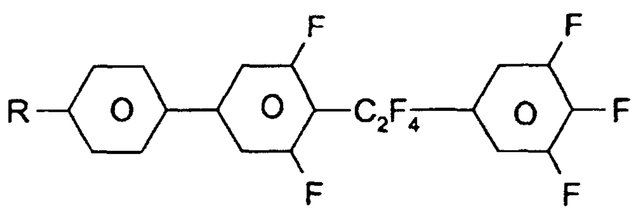

IVr

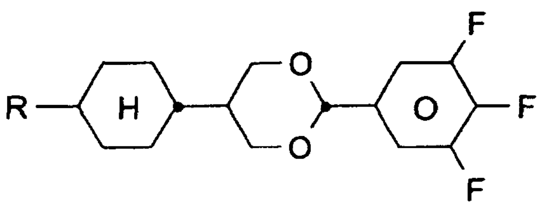

IVs

sowie gegebenenfalls eine oder mehrere Verbindungen mit polarer Endgruppe der folgenden Formeln

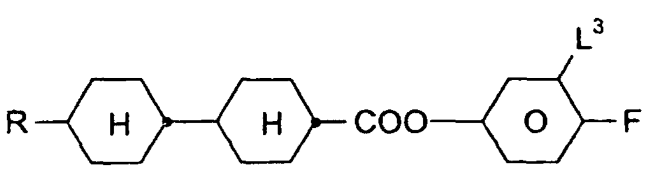

Va

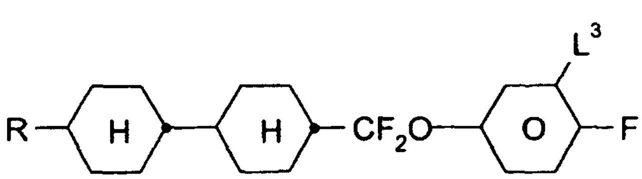

Va

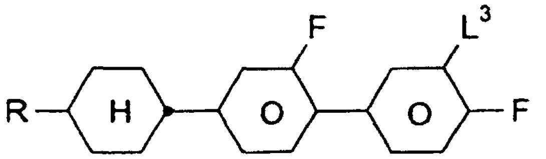

Vb

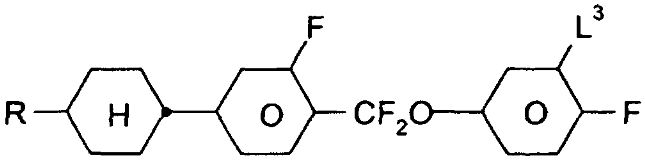

Vb

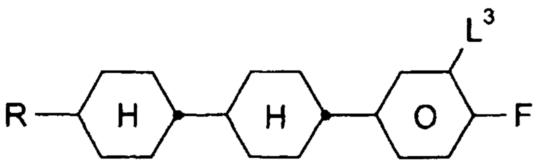

Vc

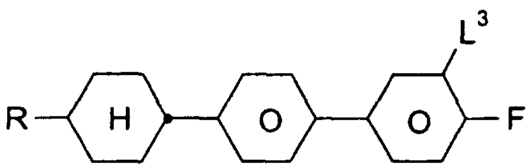

Vd

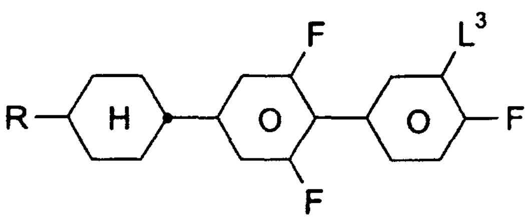

Ve

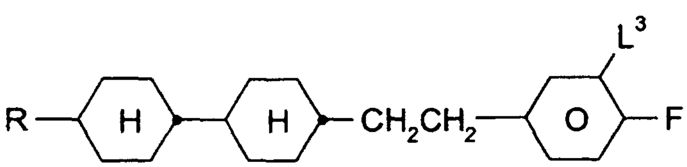

Vf

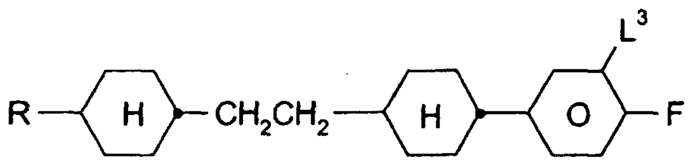

Vg

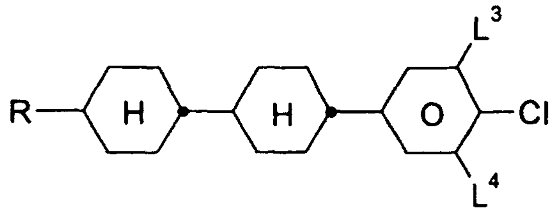

Vh

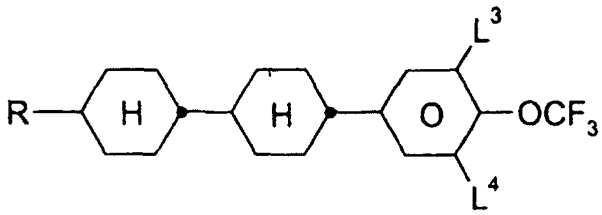

Vi

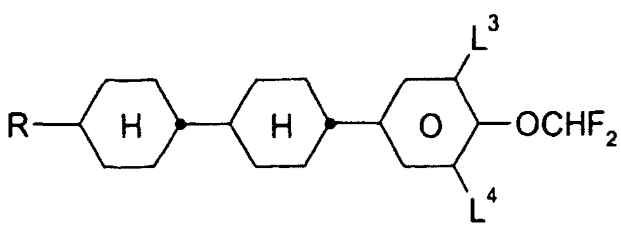

Vk

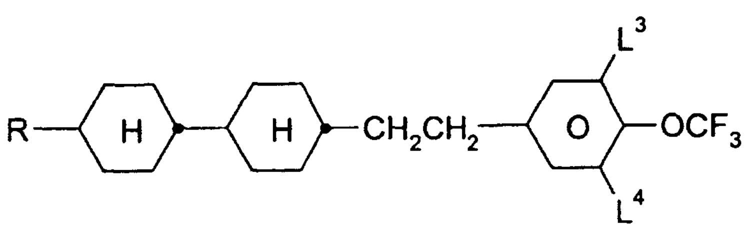

Vm

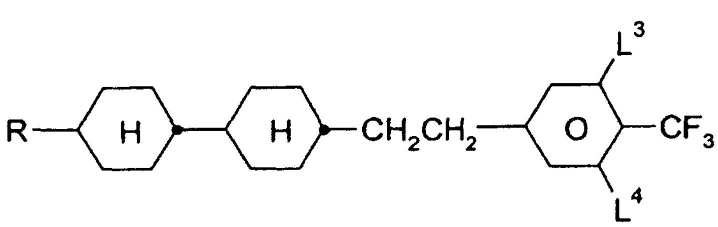

Vn

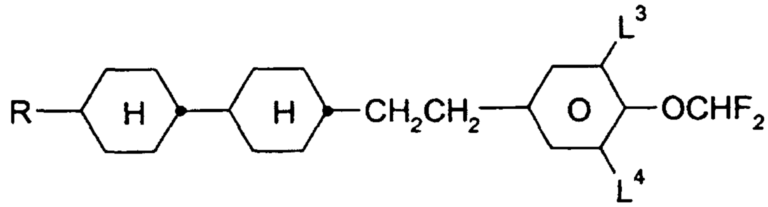

Vo

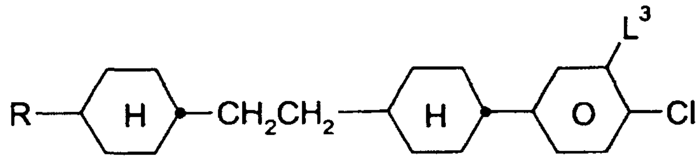

Vp

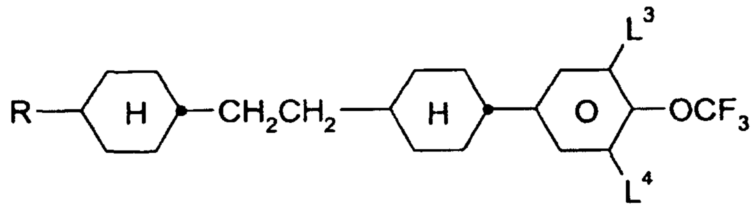

Vq

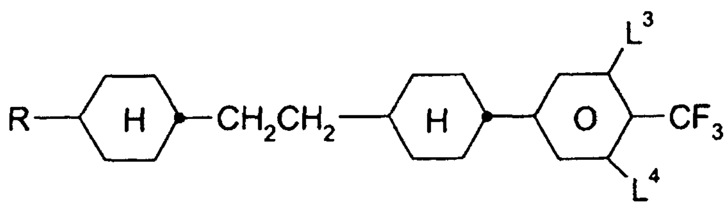

Vr

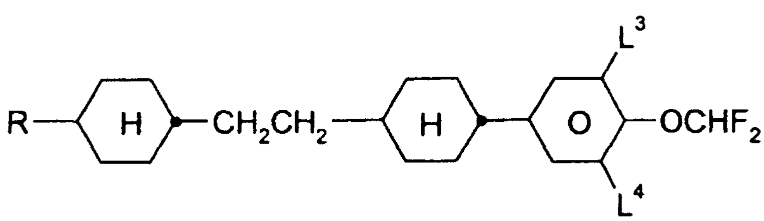

Vs

worin R eine der oben angegebenen Bedeutungen besitzt und $L^3$ und $L^4$ jeweils unabhängig voneinander H oder F bedeuten. R bedeutet in diesen Verbindungen besonders bevorzugt Alkyl oder Alkoxy mit 1 bis 8 C-Atomen.

Besonders bevorzugt sind Verbindungen der Formeln IVa, IVb, IVc, IVd, IVm und Vi, insbesondere Verbindungen der Formeln IVa, IVm und Vi.

Bevorzugte Flüssigkristallmischungen enthalten eine oder mehrere Verbindungen der Komponente A vorzugsweise in einem Anteil von 15 % bis 80 %, besonders bevorzugt von 20 % bis 70 %. Diese Verbindungen besitzen eine dielektrische Anisotropie $\Delta\varepsilon \geq +3$, insbesondere $\Delta\varepsilon \geq +8$, besonders bevorzugt $\Delta\varepsilon \geq +12$.

Bevorzugte Flüssigkristallmischungen enthalten ein oder mehrere Verbindungen der Komponente B, vorzugsweise in einem Anteil von 20 bis 85 %, besonders bevorzugt in einem Anteil von 30 bis 75 %. Die Verbindungen der Gruppe B, insbesondere solche mit Alkenylgruppen, zeichnen sich insbesondere durch ihre niedrigen Werte für die Rotationsviskosität $\gamma_1$ aus.

Die Komponente B enthält neben ein oder mehreren Verbindungen der Formel II vorzugsweise eine oder mehrere Verbindungen ausgewählt aus der Gruppe bestehend aus den Zweiringverbindungen der folgenden Formeln

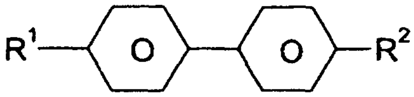

IV1

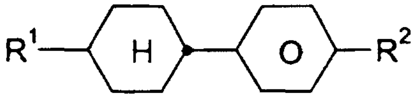

IV2

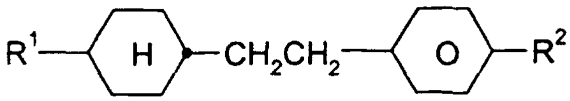

IV3

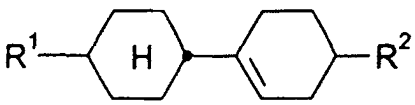

IV4

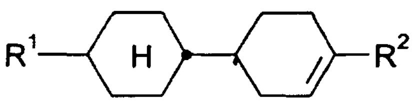

IV5

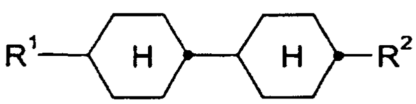

IV6

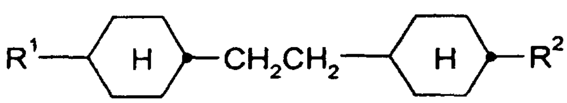

IV7

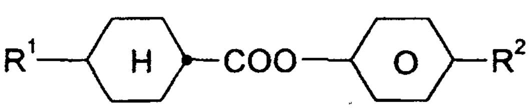

IV8

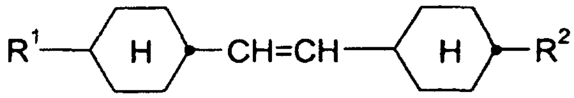

IV9

und/oder eine oder mehrere Verbindungen ausgewählt aus der Gruppe bestehend aus den Dreiringverbindungen der folgenden Formeln

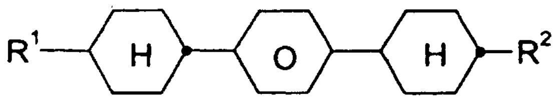

IV10

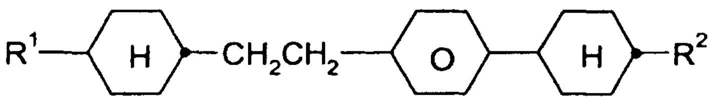

IV11

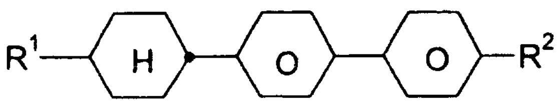

IV12

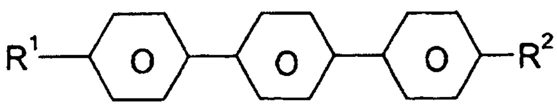

IV13

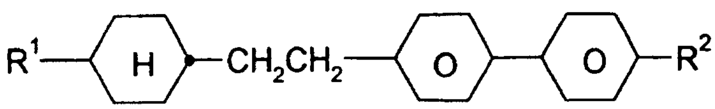

IV14

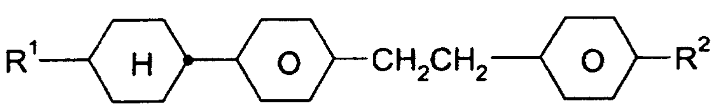

IV15

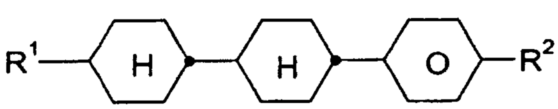

IV16

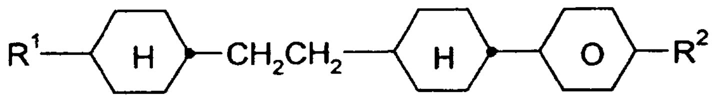

IV17

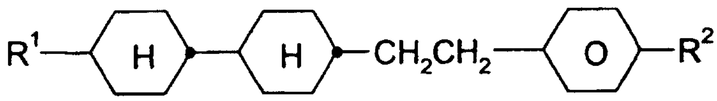

IV18

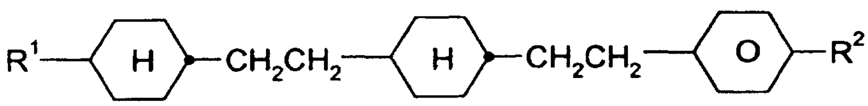

IV19

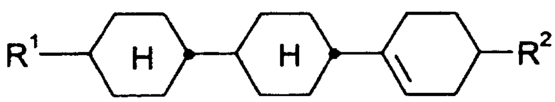

IV20

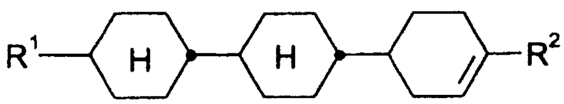

IV21

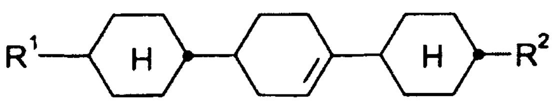

IV22

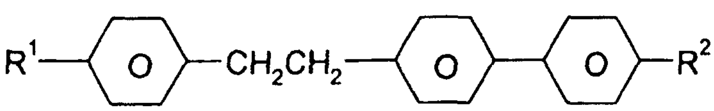

IV23

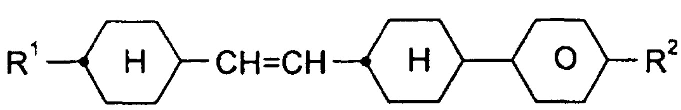

IV24

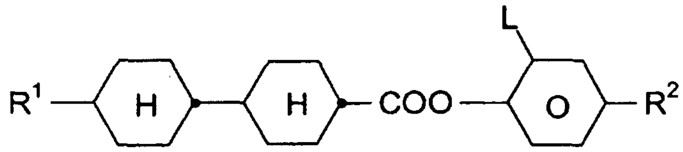

IV32

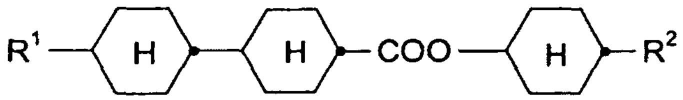

IV33

und/oder eine oder mehrere Verbindungen ausgewählt aus der Gruppe bestehend aus den Vierringverbindungen der folgenden Formeln

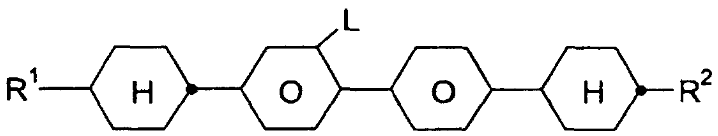

IV25

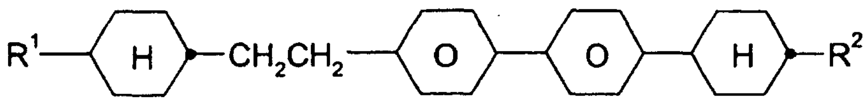

IV26

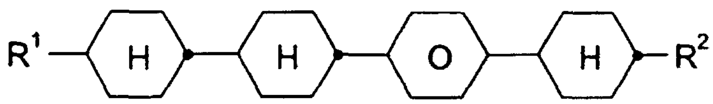

IV27

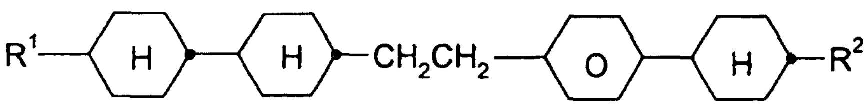

IV28

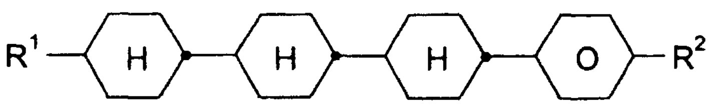

IV29

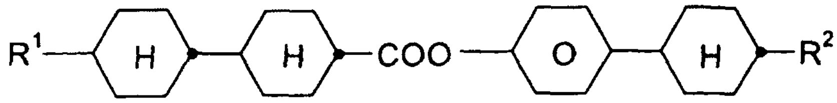

IV30

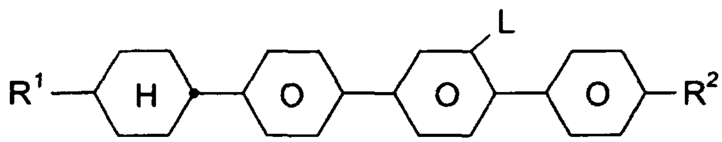

IV31

worin

$R^1$ und $R^2$ jeweils unabhängig voneinander eine Alkyl-, Alkoxy- oder Alkenylgruppe mit 1 bis 12 C-Atomen, wobei auch ein oder zwei nicht benachbarte $CH_2$-Gruppen durch -O-, -CH=CH-, -CO-, -OCO- oder -COO- so ersetzt sein können, daß O-Atome nicht direkt miteinander verknüpft sind, und

L H oder F

bedeuten.

Die 1,4-Phenylengruppen in IV10 bis IV19 und IV23 bis IV 32 können jeweils unabhängig voneinander auch durch Fluor ein- oder mehrfach substituiert sein.

Besonders bevorzugt sind Verbindungen der Formeln IV 25 bis IV 31, worin $R^1$ Alkyl und $R^2$ Alkyl oder Alkoxy, insbesondere Alkoxy, jeweils mit 1 bis 7 C-Atomen, bedeutet. Ferner bevorzugt sind Verbindungen der Formel IV 25 und IV 31, worin L F bedeutet.

Ganz besonders bevorzugt sind Verbindungen der Formeln IV25 und IV27.

$R^1$ und $R^2$ in den Verbindungen der Formeln IV1 bis IV30 bedeuten besonders bevorzugt geradkettiges Alkyl oder Alkoxy mit 1 bis 12 C-Atomen.

Die flüssigkristallinen Mischungen enthalten gegebenenfalls eine optisch aktive Komponente C in einer Menge, daß das Verhältnis zwischen Schichtdicke (Abstand der Trägerplatten) und natürlicher Ganghöhe der chiralen nematischen Flüssigkristallmischung größer 0,2 ist. Für die Komponente stehen dem Fachmann eine Vielzahl, zum Teil kommerziell erhältlicher chiraler Dotierstoffe zur Verfügung z.B. wie Cholesterylnonanoat, S-811 der Merck KGaA, Darmstadt und CB15 (BDH, Poole, UK). Die Wahl der Dotierstoffe ist an sich nicht kritisch.

Der Anteil der Verbindungen der Komponente C beträgt vorzugsweise 0 bis 10 %, insbesondere 0 bis 5 %, besonders bevorzugt 0 bis 3 %.

Die erfindungsgemäßen Mischungen enthalten neben den Verbindungen der Formel I vorzugsweise eine oder mehrere flüssigkristalline Tolan-Verbindungen. Aufgrund der hohen Doppelbrechung $\Delta n$ der Tolan-Verbindungen kann bei geringeren Schichtdicken gearbeitet werden, wodurch die Schaltzeiten deutlich kürzer werden. Die Tolan-Verbindungen sind vorzugsweise ausgewählt aus der Gruppe bestehend aus Ta bis Th

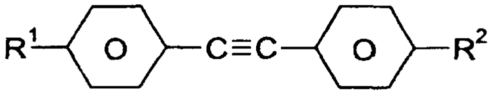

Ta

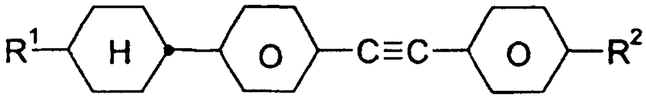

Tb

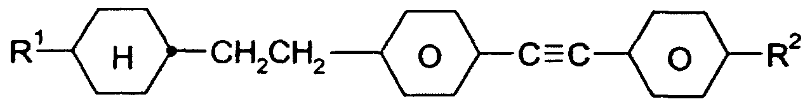

Tc

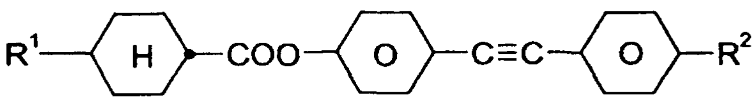

Td

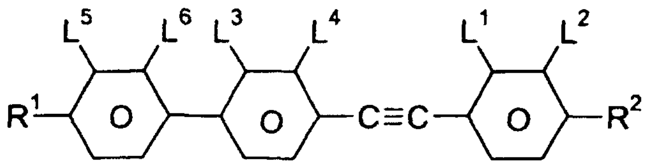

Te

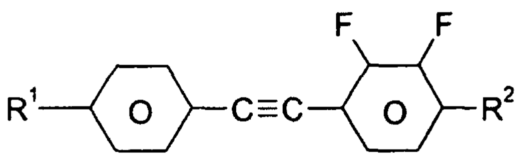

Tf

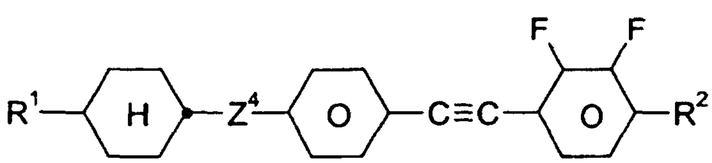

Tg

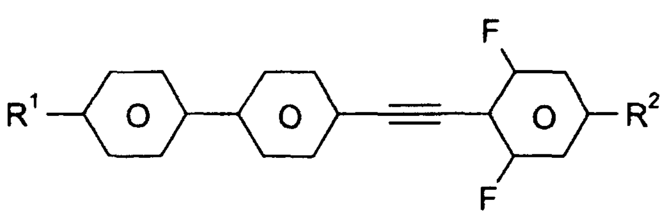

Th

worin $R^1$ und $R^2$ die oben angegebene Bedeutung besitzen,

$Z^4$ -CO-O-, -$CH_2CH_2$- oder eine Einfachbindung, und

$L^1$ bis $L^6$ jeweils unabhängig voneinander H oder F bedeuten.

Besonders bevorzugt sind Verbindungen der Formel Ta, Tb und Th.

Besonders bevorzugte Verbindungen der Formel Te sind solche, worin einer, zwei oder drei der Reste $L^1$ bis $L^6$ F und die anderen H bedeuten, wobei $L^1$ und $L^2$ bzw. $L^3$ und $L^4$ bzw. $L^5$ und $L^6$ nicht beide gleichzeitig F bedeuten.

Der Anteil der Verbindungen aus der Gruppe enthaltend Ta und Tb ist vorzugsweise 5 bis 50 %, insbesondere 10 bis 40 %. Der Anteil der Verbindungen der Formel Th ist vorzugsweise 2 bis 35 %, insbesondere 4 bis 25 %.
Der Anteil der Verbindungen der Formeln Ta bis Th ist vorzugsweise 2 bis 55 %, insbesondere 5 bis 35 %.
Die erfindungsgemäßen Mischungen können auch gegebenenfalls bis zu 20 % einer oder mehrerer Verbindungen mit einer dielektrischen Anisotropie von weniger als -2 (Komponente D) enthalten.
Falls die Mischungen Verbindungen der Komponente D enthalten, so sind dies vorzugsweise eine oder mehrere Verbindungen mit dem Strukturelement 2,3-Difluor-1,4-phenylen, z.B. Verbindungen gemäß DE-OS 38 07 801, 38 07 861, 38 07 863, 38 07 864 oder 38 07 908. Besonders bevorzugt sind Tolane mit diesem Strukturelement gemäß der Internationalen Patentanmeldung PCT/DE 88/00133.
Weitere bekannte Verbindungen der Komponente D sind z.B. Derivate der 2,3-Dicyanhydrochinone oder Cyclohexanderivate mit dem Strukturelement

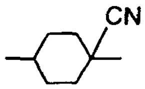

oder

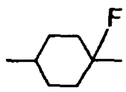

gemäß DE-OS 32 31 707 bzw. DE-OS 34 07 013.
Vorzugsweise enthalten die erfindungsgemäßen Flüssigkristallanzeigen keine Verbindungen der Komponente D.
Der Ausdruck "Alkenyl" in der Bedeutung von R, $R^1$, $R^2$, $R^3$ und $R^4$ umfaßt geradkettige und verzweigte Alkenylgruppen, im Falle von R, $R^1$ und $R^2$ mit 2-12, im Falle von $R^3$ und $R^4$ mit 2-7 Kohlenstoffatomen, insbesondere die geradkettigen Gruppen. Besonders bevorzugte Alkenylgruppen sind $C_2$-$C_7$-1E-Alkenyl, $C_4$-$C_7$-3E-Alkenyl, $C_5$-$C_7$-4-Alkenyl, $C_6$-$C_7$-5-Alkenyl, und $C_7$-6-Alkenyl, insbesondere $C_2$-$C_7$-1E-Alkenyl, $C_4$-$C_7$-3E-Alkenyl und $C_5$-$C_7$-4-Alkenyl.
Beispiele bevorzugter Alkenylgruppen sind Vinyl, 1E-Propenyl, 1E-Butenyl, 1E-Pentenyl, 1E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.
Die einzelnen Verbindungen der Formeln I, II, III, IV, V, VI und T bzw. deren Unterformeln sowie auch andere Verbindungen, die in den erfindungsgemäßen TN- und STN-Anzeigen verwendet werden können, sind entweder bekannt, oder sie können analog zu den bekannten Verbindungen hergestellt werden.
In besonders bevorzugten Ausführungsformen enthalten die Mischungen

- eine oder mehrere Verbindungen ausgewählt aus den Formeln Ib, Ic, Id, If und Ig,
- eine, zwei oder drei Verbindungen der Formel I,
- 3 bis 40 %, insbesondere 8 bis 35 %, besonders bevorzugt 15 bis 25 % einer oder mehrerer Verbindungen der Formel I,
- 5 bis 60 %, insbesondere 15 bis 50 % einer oder mehrerer Alkenylverbindungen der Formel II und II*,
- eine oder mehrere Alkenylverbindungen ausgewählt aus den Formeln IIf, IIg, IIh, IIi und II*a, worin alkyl eine Alkylgruppe mit 1 bis 8 C-Atomen und $R^{3a}$ H oder $CH_3$ bedeutet,
- eine oder mehrere, insbesondere zwei bis fünf Verbindungen der Formel IIIa, IIIb, IIIc und/oder IIIh,
- eine oder mehrere Verbindungen der Formel IV25 und/oder IV27, wobei L in Formel IV 25 H oder F, besonders bevorzugt F bedeutet. Der Anteil dieser Verbindungen in den Flüssigkristallmischungen liegt vorzugsweise bei 10 bis 45 %, insbesondere bei 15 bis 40 %,

- mehr als 20 % an Verbindungen mit positiver dielektrischer Anisotropie, insbesondere mit $\Delta\varepsilon \geq +12$,

Die erfindungsgemäßen Mischungen zeichnen sich insbesondere beim Einsatz in TN- und STN-Anzeigen mit hohen Schichtdicken durch sehr niedrige Summenschaltzeiten aus ($t_{ges} = t_{on} + t_{off}$).

Die in den erfindungsgemäßen TN- und STN-Zellen verwendeten Flüssigkristallmischungen sind dielektrisch positiv mit $\Delta\varepsilon \geq 1$. Besonders bevorzugt sind Flüssigkristallmischungen mit $\Delta\varepsilon \geq 3$, insbesondere mit $\Delta\varepsilon \geq 5$.

Die erfindungsgemäßen Flüssigkristallmischungen weisen günstige Werte für die Schwellenspannung $V_{10/0/20}$ und für die Rotationsviskosität $\gamma_1$ auf. Ist der Wert für den optischen Wegunterschied $d \cdot \Delta n$ vorgegeben, wird der Wert für die Schichtdicke d durch die optische Anisotropie $\Delta n$ bestimmt. Insbesondere bei relativ hohen Werten für $d \cdot \Delta n$ ist i.a. die Verwendung erfindungsgemäßer Flüssigkristallmischungen mit einem relativ hohen Wert für die optische Anisotropie bevorzugt, da dann der Wert für d relativ klein gewählt werden kann, was zu günstigeren Werten für die Schaltzeiten führt. Aber auch solche erfindungsgemäßen Flüssigkristallanzeigen, die erfindungsgemäße Flüssigkristallmischungen mit kleineren Werten für $\Delta n$ enthalten, sind durch vorteilhafte Werte für die Schaltzeiten gekennzeichnet.

Die erfindungsgemäßen Flüssigkristallmischungen sind weiter durch vorteilhafte Werte für die Steilheit der elektrooptischen Kennlinie gekennzeichnet, und können insbesondere bei Temperaturen über 20 °C mit hohen Multiplexraten betrieben werden. Darüber hinaus weisen die erfindungsgemäßen Flüssigkristallmischungen eine hohe Stabilität und günstige Werte für den elektrischen Widerstand und die Frequenzabhängigkeit der Schwellenspannung auf. Die erfindungsgemäßen Flüssigkristallanzeigen weisen einen großen Arbeitstemperaturbereich und eine gute Winkelabhängigkeit des Kontrastes auf.

Der Aufbau der erfindungsgemäßen Flüssigkristall-Anzeigeelemente aus Polarisatoren, Elektrodengrundplatten und Elektroden mit einer solchen Oberflächenbehandlung, daß die Vorzugsorientierung (Direktor) der jeweils daran angrenzenden Flüssigkristall-Moleküle von der einen zur anderen Elektrode gewöhnlich um betragsmäßig 160° bis 720° gegeneinander verdreht ist, entspricht der für derartige Anzeigeelemente üblichen Bauweise. Dabei ist der Begriff der üblichen Bauweise hier weit gefaßt und umfaßt auch alle Abwandlungen und Modifikationen der TN- und STN-Zelle, insbesondere auch Matrix-Anzeigeelemente sowie die zusätzliche Magnete enthaltenden Anzeigeelemente.

Der Oberflächentiltwinkel an den beiden Trägerplatten kann gleich oder verschieden sein. Gleiche Tiltwinkel sind bevorzugt. Bevorzugte TN-Anzeigen weisen Anstellwinkel zwischen der Längsachse der Moleküle an der Oberfläche der Trägerplatten und den Trägerplatten von 0° bis 7°, vorzugsweise 0,01° bis 5°, insbesondere 0,1 bis 2° auf. In den STN-Anzeigen ist der Anstellwinkel bei 1 ° bis 30°, vorzugsweise bei 1° bis 12° und insbesondere bei 3° bis 10°.

Der Verdrillungswinkel der TN-Mischung in der Zelle liegt dem Betrag nach zwischen 22,5° und 170°, vorzugsweise zwischen 45° und 130° und insbesondere zwischen 80° und 115°. Der Verdrillungswinkel der STN-Mischung in der Zelle von Orientierungsschicht zu Orientierungschicht liegt dem Betrag nach zwischen 100° und 600°, vorzugsweise zwischen 170° und 300° und insbesondere zwischen 180° und 270°.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die erfindungsgemäßen Flüssigkristallmischungen eignen sich auch zur Verwendung als Flüssigkristall-(FK-) Medien in cholesterischen Flüssigkristall-(CFK-)Anzeigen, insbesondere SSCT- (engl. "surface stabilized cholesteric texture") und PSCT- (engl. "polymer stabilized cholesteric texture") Anzeigen, wie zum Beispiel in WO 92/19695, US 5,384,067, US 5,453,863, US 6,172,720 oder US 5,661,533 beschrieben. CFK-Anzeigen enthalten typischerweise ein cholesterisches FK-Medium bestehend aus einer nematischen Komponente und einer optisch aktiven Komponente, welches im Vergleich zu TN- und STN-Anzeigen eine deutlich höhere helikale Verdrillung aufweist, und Selektivreflektion von zirkular polarisiertem Licht zeigt. Die Reflektionswellenlänge enspricht dem Produkt aus der Ganghöhe der cholesterischen Helix und dem mittleren Brechungsindex des CFK-Mediums.

Zu diesem Zweck werden den erfindungsgemäßen FK-Mischungen ein oder mehrere chirale Dotierstoffe zugesetzt, deren Verdrillungsvermögen und Konzentration so gewählt sind, daß das FK-Medium eine cholesterische Phase bei Raumtemperatur aufweist und eine Reflektionswellenlänge besitzt, die vorzugsweise im sichtbaren, UV- oder IR-Bereich des elektromagnetischen Spektrums, insbesondere zwischen 400 und 800 nm, liegt. Geeignete Dotierstoffe sind dem Fachmann bekannt und kommerziell erhältlich, wie zum Beispiel Cholesterylnonanoat (CN), CB15, R/S-811, R/S-1011, R/S-2011, R/S-3011 oder R/S-4011 (Merck KGaA, Darmstadt). Besonders geeignet sind hochverdrillende Dotierstoffe mit einem chiralen Zuckerrest, insbesondere Sorbitolderivate wie in WO 98/00428 beschrieben. Falls zwei oder mehr Dotierstoffe zugesetzt werden, können diese gleichen oder entgegengesetzten Drehsinn und gleiche oder entgegengesetzte Temperaturabhängigkeit der Verdrillung aufweisen.

CFK-Medien, enthaltend als nematische Komponente eine erfindungsgemäße FK-Mischung und als optisch

aktive Komponente einen oder mehrere chirale Dotierstoffe, sind ein weiterer Gegenstand der vorliegenden Erfindung. Gegenstand der vorliegenden Erfindung sind ferner CFK-Anzeigen, insbesondere SSCT- und PSCT-Anzeigen, enthaltend CFK-Medien wie oben beschrieben.

Die Verbindungen der Formel I und ihre Herstellung sind teilweise aus der JP-A-03-41037 bekannt. Die neuen Verbindungen der Formel I sind ein weiterer Gegenstand der vorliegenden Anmeldung.

Die Dielektrika können auch weitere, dem Fachmann bekannte und in der Literatur beschriebene Zusätze enthalten. Beispielsweise können 0-15 % pleochroitische Farbstoffe zugesetzt werden.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Reste $C_nH_{2n+1}$ und $C_mH_{2m+1}$ sind geradkettige Alkylreste mit n bzw. m C-Atomen. Die Alkenylreste weisen die trans-Konfiguration auf. Die Codierung gemäß Tabelle B versteht sich von selbst. In Tabelle A ist nur das Acronym für den Grundkörper angegeben. Im Einzelfall folgt getrennt vom Acronym für den Grundkörper mit einem Strich der in der untenstehenden Tabelle angegebene Code für die Substituenten $R^1$, $R^2$, $L^1$, $L^2$ und $L^3$.

| Code für $R^1$, $R^2$, $L^1$, $L^2$, $L^3$ | $R^1$ | $R^2$ | $L^1$ | $L^2$ | $L^3$ |
|---|---|---|---|---|---|
| nm | $C_nH_{2n+1}$ | $C_mH_{2m+1}$ | H | H | H |
| nOm | $OC_nH_{2n+1}$ | $C_mH_{2m+1}$ | H | H | H |
| nO.m | $C_nH_{2n+1}$ | $OC_mH_{2m+1}$ | H | H | H |
| n | $C_nH_{2n+1}$ | CN | H | H | H |
| nN.F | $C_nH_{2n+1}$ | CN | H | H | F |
| nN.F.F | $C_nH_{2n+1}$ | CN | H | F | F |
| nF | $C_nH_{2n+1}$ | F | H | H | H |
| nOF | $OC_nH_{2n+1}$ | F | H | H | H |
| nF.F | $C_nH_{2n+1}$ | F | H | H | F |
| nmF | $C_nH_{2n+1}$ | $C_mH_{2m+1}$ | F | H | H |
| $nOCF_3$ | $C_nH_{2n+1}$ | $OCF_3$ | H | H | H |
| n-Vm | $C_nH_{2n+1}$ | $-CH=CH-C_mH_{2m+1}$ | H | H | H |
| nV-Vm | $C_nH_{2n+1}-CH=CH-$ | $-CH=CH-C_mH_{2m+1}$ | H | H | H |

Die TN- und STN-Displays enthalten vorzugsweise flüssigkristalline Mischungen, die sich aus ein oder mehreren Verbindungen aus den Tabellen A und B zusammensetzen.

**Tabelle A:** ($L^1$, $L^2$, $L^3$ = H oder F)

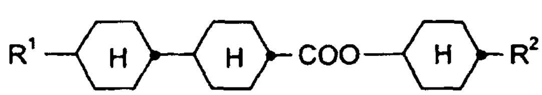

**CH**

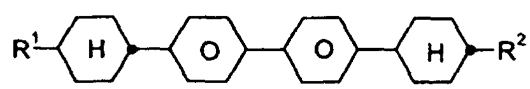

**CBC**

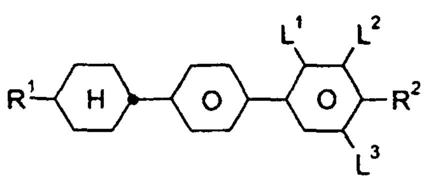

**BCH**

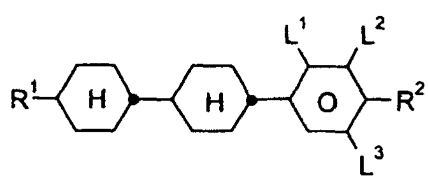

**CCP**

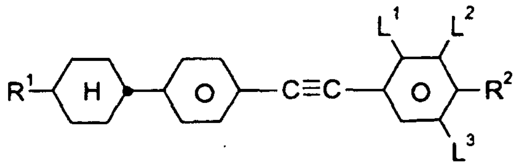 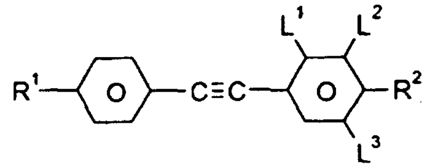

**CPTP** **PTP**

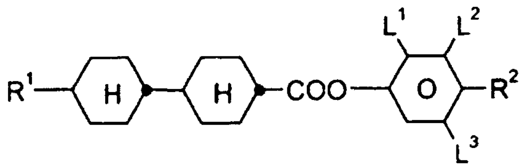 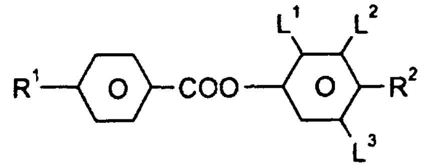

**CP** **ME**

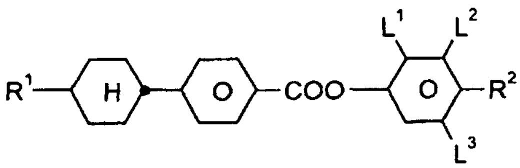 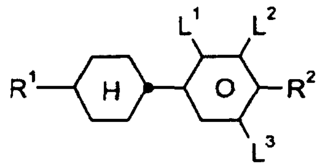

**HP** **PCH**

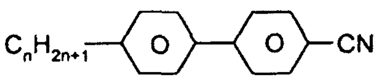 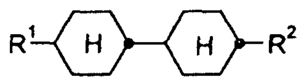

**K3·n** **CCH**

**Tabelle B:**

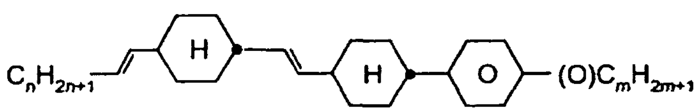

**CVCP-nV-(O)m**

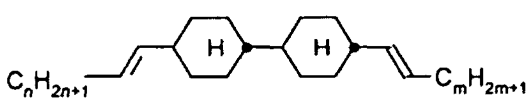 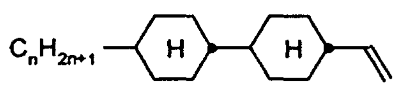

**CC-nV-Vm** **CC-n-V**

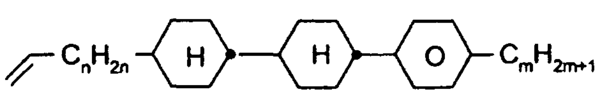 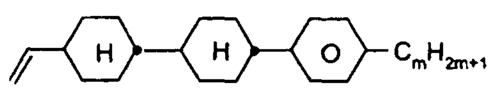

**CCP-Vn-m** **CCP-V-m**

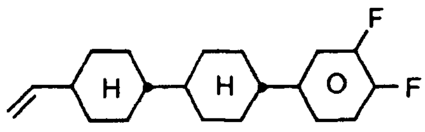

**CCG-V-F**

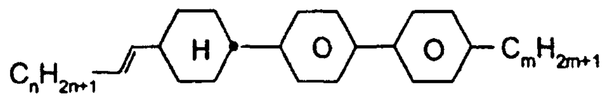

**CPP-nV-m**

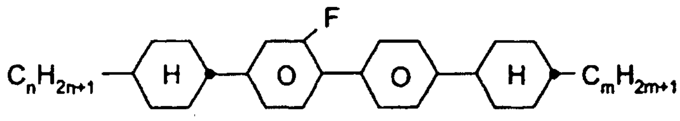

**CBC-nmF**

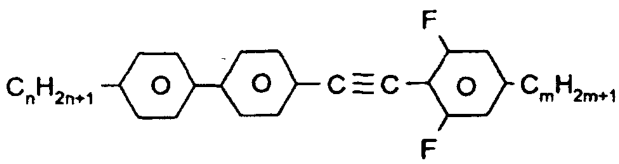

**PPTUI-nm**

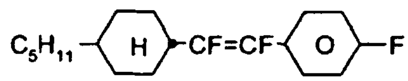

**IS-7134**

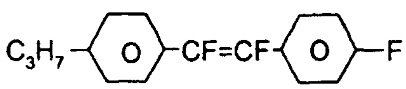

**IS-7135**

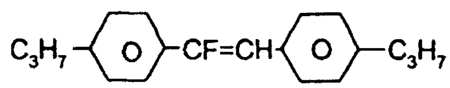

**IS-7151**

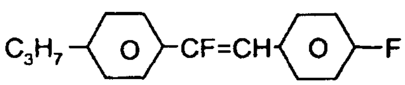

**IS-7157**

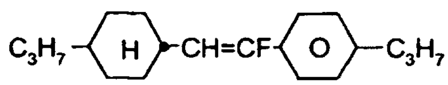

**IS-7197**

Die folgenden Beispiele sollen die Erfindung erläutern, ohne sie zu begrenzen. Es bedeutet

| | |
|---|---|
| Klp. | Klärpunkt (Phasenübergangs-Temperatur nematisch-isotrop), |
| S-N | Phasenübergangs-Temperatur smektisch-nematisch, |
| Visk. | Fließviskosität (soweit nicht anders angegeben bei 20 °C), |
| $\Delta n$ | optische Anisotropie (589 nm, 20 °C) |
| $n_o$ | ordentlicher Brechungsindex (589 nm, 20 °C) |
| $\Delta\varepsilon$ | dielektrische Anisotropie (1 kHz, 20 °C) |
| $\varepsilon_\perp$ | Dielektrizitätskonstante senkrecht zur Moleküllängsachse (1 kHz, 20 °C) |
| $\gamma_1$ | Rotationsviskosität |
| S | Kennliniensteilheit = $V_{90}/V_{10}$ |
| $V_{10}$ | Schwellenspannung = charakteristische Spannung bei einem relativen Kontrast von 10 %, |
| $V_{90}$ | charakteristische Spannung bei einem relativen Kontrast von 90 %, |
| $t_{ave}$ | $\frac{t_{on}+t_{off}}{2}$ (mittlere Schaltzeit) |
| $t_{on}$ | Zeit vom Einschalten bis zur Erreichung von 90 % des maximalen Kontrastes, |
| $t_{off}$ | Zeit vom Ausschalten bis zur Erreichung von 10 % des maximalen Kontrastes, |
| Mux | Multiplexrate |
| $t_{store}$ | Tieftemperatur-Lagerstabilität in Stunden (- 20 °C, - 30 °C, - 40 °C) |

Vor- und nachstehend sind alle Temperaturen in °C angegeben. Die Prozentzahlen sind Gewichtsprozente. Alle Werte beziehen sich auf 20 °C, soweit nicht anders angegeben. Die Ansteuerung der Anzeigen erfolgt, soweit nicht anders angegeben, bei einer Multiplexrate von 1/64 und einem Bias von 1/9. Die Verdrillung (twist) beträgt 240 °, soweit nicht anders angegeben.

Vergleichsbeispiel 1

Eine TN- und STN-Mischung bestehend aus

| | | | |
|---|---|---|---|
| PCH-3 | 13.00 % | Klp. | 104,0 °C |
| K6 | 7.00 % | $\Delta n$ | 0,1219 |
| ME2N.F | 3.00 % | | |
| ME3N.F | 2.00 % | $V_{10}$ | 2,30 V |
| ME4N.F | 4.00 % | S | 1,045 |
| CBC-33 | 4.00 % | $t_{ave}$ | 300 ms |
| CBC-33F | 4.00 % | | |
| CCP-V-1 | 14.00 % | | |
| CCP-V2-1 | 15.00 % | | |
| CPP-1V2-2 | 5.00 % | | |
| CCG-V-F | 9.00 % | | |
| CC-5-V | 20.00 % | | |

Beispiel 1

Eine TN- und STN-Mischung bestehend aus

| | | | |
|---|---|---|---|
| PCH-3 | 13.00 % | Klp. | 102,0°C |
| K6 | 7.00 % | $\Delta n$ | 0,1358 |
| ME2N.F | 3.00 % | $\Delta\varepsilon$ | 9.6 |
| ME3N.F | 2.00 % | $V_{10}$ | 2,19V |
| ME4N.F | 4.00 % | S | 1,032 |
| CBC-33 | 4.00 % | $t_{ave}$ | 319 ms |
| CBC-33F | 4.00 % | | |
| CCP-V-1 | 14.00 % | | |
| CCP-V2-1 | 15.00 % | | |
| CPP-1V2-2 | 5.00 % | | |
| CCG-V-F | 9.00 % | | |
| IS-7134 | 20.00 % | | |

weist gegenüber Vergleichsbeispiel 1 ein höhere Doppelbrechung $\Delta n$ und eine verringerte Schwellenspannung $V_{10}$ und verbesserte Steilheit S auf.

Beispiel 2

Eine TN- und STN-Mischung bestehend aus

| | | | |
|---|---|---|---|
| PCH-3 | 13.00 % | Klp. | 106,0 °C |
| K6 | 7.00 % | $\Delta n$ | 0,1636 |
| ME2N.F | 3.00 % | $\Delta\varepsilon$ | 10,7 |
| ME3N.F | 2.00 % | $V_{10}$ | 2,08V |
| ME4N.F | 4.00 % | S | 1,066 |
| CBC-33 | 4.00 % | $t_{ave}$ | 153 ms |

(fortgesetzt)

| | | | |
|---|---|---|---|
| CBC-33F | 4.00 % | | |
| CCP-V-1 | 14.00 % | | |
| CCP-V2-1 | 15.00 % | | |
| CPP-1V2-2 | 5.00 % | | |
| CCG-V-F | 9.00 % | | |
| IS-7135 | 20.00 % | | |

weist gegenüber Vergleichsbeispiel 1 ein höhere Doppelbrechung $\Delta n$ und eine verringerte Schwellenspannung $V_{10}$ auf.

Beispiel 3

Eine TN- und STN-Mischung bestehend aus

| | | | |
|---|---|---|---|
| PCH-3 | 13.00 % | Klp. | 110,5 °C |
| K6 | 7.00 % | $\Delta n$ | 0,1680 |
| ME2N.F | 3.00 % | $\Delta\varepsilon$ | 9,9 |
| ME3N.F | 2.00 % | $V_{10}$ | 2,01 V |
| ME4N.F | 4.00 % | S | 1,112 |
| CBC-33 | 4.00 % | $t_{ave}$ | 135 ms |
| CBC-33F | 4.00 % | | |
| CCP-V-1 | 14.00 % | | |
| CCP-V2-1 | 15.00 % | | |
| CPP-1V2-2 | 5.00 % | | |
| CCG-V-F | 9.00 % | | |
| IS-7151 | 20.00 % | | |

weist gegenüber Vergleichsbeispiel 1 ein höhere Doppelbrechung $\Delta n$ und eine verringerte Schwellenspannung $V_{10}$ auf.

Beispiel 4

Eine TN- und STN-Mischung bestehend aus

| | | | |
|---|---|---|---|
| PCH-3 | 13.00 % | Klp. | 102,0 °C |
| K6 | 7.00 % | $\Delta n$ | 0,1618 |
| ME2N.F | 3.00 % | $\Delta\varepsilon$ | 11,3 |
| ME3N.F | 2.00 % | $V_{10}$ | 1,89 V |
| ME4N.F | 4.00 % | S | 1,074 |
| CBC-33 | 4.00 % | $t_{ave}$ | 172 ms |
| CBC-33F | 4.00 % | | |
| CCP-V-1 | 14.00 % | | |
| CCP-V2-1 | 15.00 % | | |
| CPP-1V2-2 | 5.00 % | | |
| CCG-V-F | 9.00 % | | |
| IS-7157 | 20.00 % | | |

weist gegenüber Vergleichsbeispiel 1 ein höhere Doppelbrechung $\Delta n$ und eine verringerte Schwellenspannung $V_{10}$ auf.

Beispiel 5

Eine TN- und STN-Mischung bestehend aus

| | | | |
|---|---|---|---|
| PCH-3 | 13.00 % | Klp. | 99,5 °C |
| K6 | 7.00 % | $\Delta n$ | 0,1374 |
| ME2N.F | 3.00 % | $\Delta\varepsilon$ | 9,1 |
| ME3N.F | 2.00 % | $V_{10}$ | 2,16 V |
| ME4N.F | 4.00 % | S | 1,044 |
| CBC-33 | 4.00 % | $t_{ave}$ | 315 ms |
| CBC-33F | 4.00 % | | |
| CCP-V-1 | 14.00 % | | |
| CCP-V2-1 | 15.00 % | | |
| CPP-1V2-2 | 5.00 % | | |
| CCG-V-F | 9.00 % | | |
| IS-7197 | 20.00 % | | |

weist gegenüber Vergleichsbeispiel 1 ein höhere Doppelbrechung $\Delta n$ und eine verringerte Schwellenspannung $V_{10}$ auf.

## Patentansprüche

1. Flüssigkristallmischung, **dadurch gekennzeichnet, daß** sie mindestens eine Verbindung der Formel I enthält

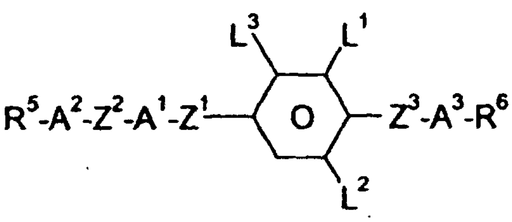

I

und mindestens eine Verbindung der Formel II und/oder II* enthält

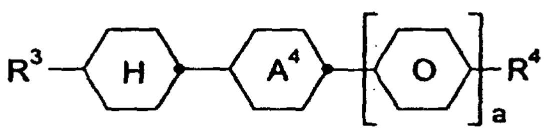

II

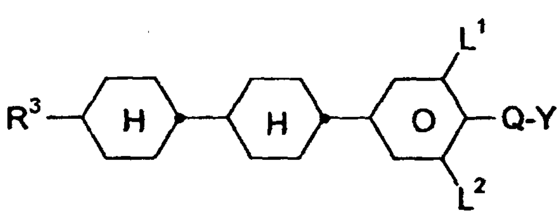

II*

worin

$A^1$ trans-1,4-Cyclohexylen, 1,4-Phenylen, 3-Fluor-1,4-phenylen oder 3,5-Difluor-1,4-phenylen,

$A^2$ und $A^3$ jeweils unabhängig voneinander eine der Bedeutungen von $A^1$ oder eine Einfachbindung,

| | |
|---|---|
| $A^4$ | 1,4-phenylen oder trans-1,4-Cyclohexylen, |
| $Z^1$ | -CF=CF-, -$CR^0$=CF- oder -CF=$CR^0$-, |
| $Z^2$ und $Z^3$ | jeweils unabhängig voneinander -O-, -COO-, -OCO-, -$CH_2$O-, -O$CH_2$-, -$CH_2CH_2$-, -$CF_2$O-, -O$CF_2$-, -$CF_2CF_2$-, -CH=CH-, -C≡C-, eine Einfachbindung oder eine der Bedeutungen von $Z^1$, |
| $R^0$ | H oder $CH_3$, |
| $R^3$ | eine Alkenylgruppe mit 2 bis 7 C-Atomen, |
| $R^4$ | eine Alkyl-, Alkoxy- oder Alkenylgruppe mit 1 bis 12 C-Atomen, wobei auch ein oder zwei nicht benachbarte $CH_2$- Gruppen durch -O-, -CH=CH-, -CO-, -OCO- oder -COO- so ersetzt sein können, daß O-Atome nicht direkt miteinander verknüpft sind, |
| $R^5$ und $R^6$ | jeweils unabhängig voneinander Alkyl, Alkoxy oder Alkenyl mit 1 bis 12 C-Atomen, wobei auch ein oder zwei nicht benachbarte $CH_2$-Gruppen durch -O-, -CH=CH-, -CO-, -OCO- oder -COO- so ersetzt sein können, daß O-Atome nicht direkt miteinander verknüpft sind, CN oder -Q-Y, |
| Q | $CF_2$, $OCF_2$, CFH, OCFH oder eine Einfachbindung, |
| Y | F oder Cl, |
| $L^1$, $L^2$ und $L^3$ | jeweils unabhängig voneinander H oder F, und |
| a | 0 oder 1 |

bedeuten.

2. Flüssigkristallmischung nach Anspruch 1, **dadurch gekennzeichnet, daß** sie eine oder mehrere Verbindungen der folgenden Formeln enthält

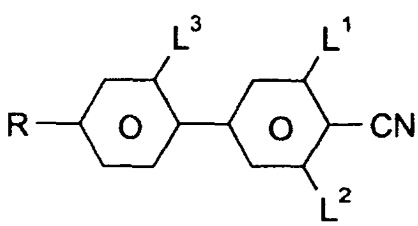

IIIa

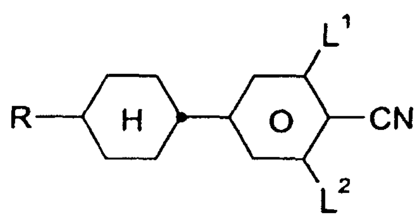

IIIb

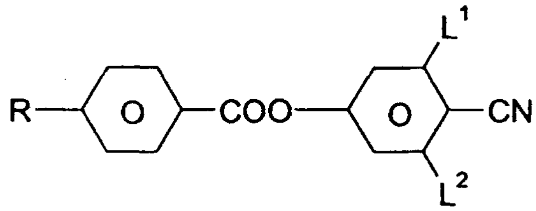

IIIc

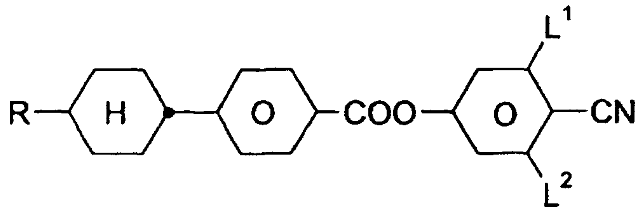

IIIf

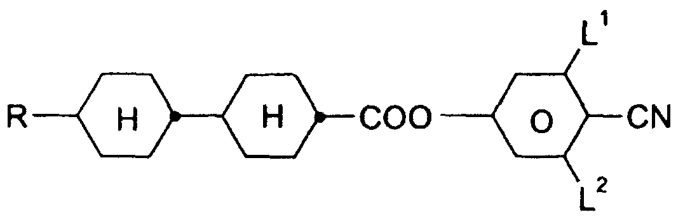

IIIh

worin

R eine Alkyl-, Alkoxy- oder Alkenylgruppe mit 1 bis 12 C-Atomen, wobei auch ein oder zwei nicht benachbarte $CH_2$- Gruppen durch -O-, -CH=CH-, -CO-, -OCO- oder -COO- so ersetzt sein können, daß O-Atome nicht direkt miteinander verknüpft sind, und

$L^1$ bis $L^3$ jeweils unabhängig voneinander H oder F

bedeuten.

3. Flüssigkristallmischung nach einem der Ansprüche 1 und 2, **dadurch gekennzeichnet, daß** sie eine oder mehrere Verbindungen der folgenden Formeln enthält

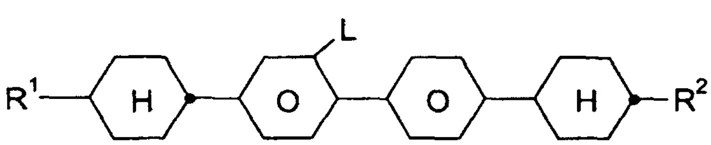

IV25

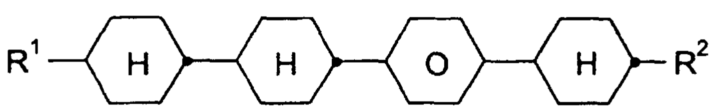

IV27

worin

$R^1$ und $R^2$ jeweils unabhängig voneinander eine Alkyl-, Alkoxy- oder Alkenylgruppe mit 1 bis 12 C-Atomen, wobei auch ein oder zwei nicht benachbarte $CH_2$-Gruppen durch -O-, -CH=CH-, -CO-, -OCO- oder -COO- so ersetzt sein können, daß O-Atome nicht direkt miteinander verknüpft sind, und

L H oder F

bedeuten.

4. Flüssigkristallmischung nach einem der Ansprüche 1 bis 3, **dadurch gekennzeichnet, daß** sie mindestens eine Verbindung ausgewählt aus den folgenden Formeln enthält

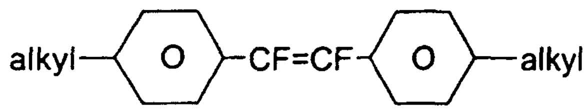
Ia

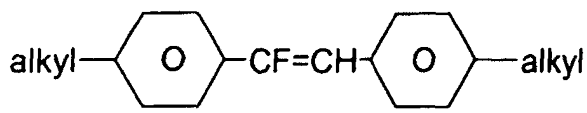
Ib

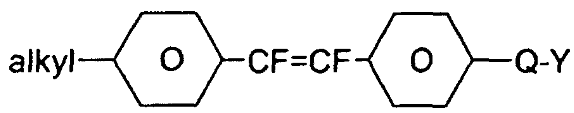
Ic

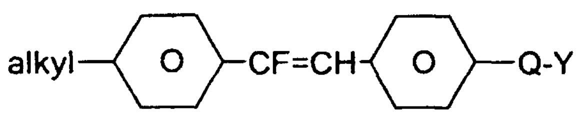
Id

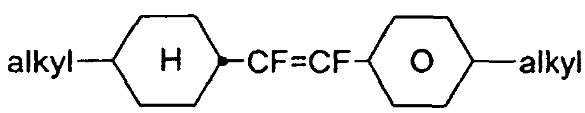
Ie

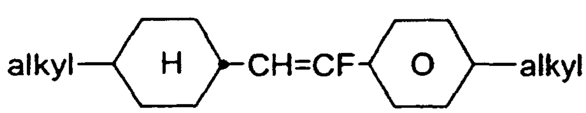
If

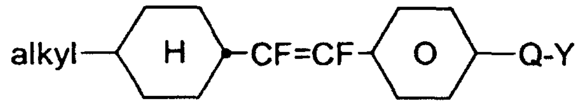

Ig

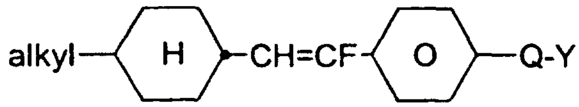

Ih

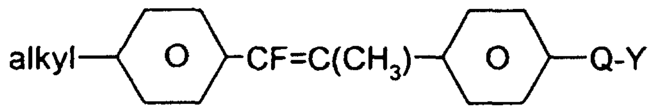

Ii

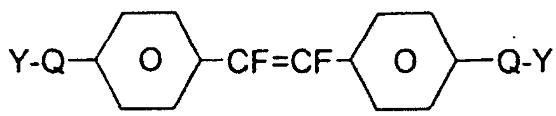

Ik

worin alkyl eine Alkylgruppe mit 1 bis 8 C-Atomen bedeutet und Q-Y die in Formel I angegebene Bedeutung besitzt.

**5.** Flüssigkristallmischung nach einem der Ansprüche 1 bis 4, **dadurch gekennzeichnet, daß** sie eine oder mehrere Verbindungen ausgewählt aus den folgenden Formeln enthält

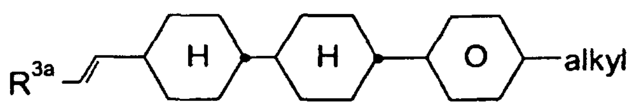

IIf

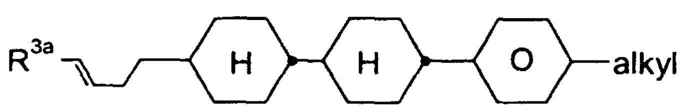

IIg

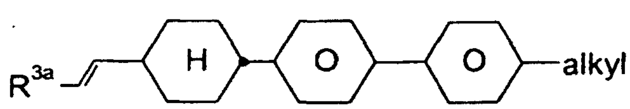

IIh

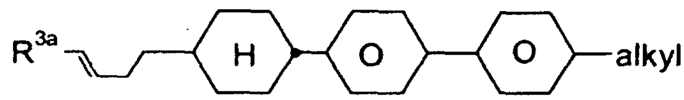

IIi

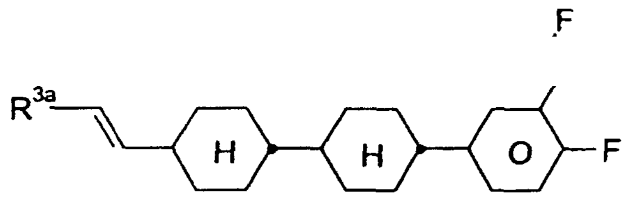

II*a

worin $R^{3a}$ und $R^{4a}$ jeweils unabhängig voneinander H, $CH_3$, $C_2H_5$ oder n-$C_3H_7$ und alkyl eine Alkylgruppe mit 1 bis 8 C-Atomen bedeuten.

**6.** Flüssigkristallmischung nach einem der Ansprüche 1 bis 5, **dadurch gekennzeichnet, daß** sie 3 bis 40 % einer oder mehrerer Verbindungen der Formel I enthält.

**7.** Flüssigkristallanzeige enthaltend eine Flüssigkristallmischung nach einem der Ansprüche 1 bis 6.

**8.** TN- oder STN-Flüssigkristallanzeige mit

- zwei Trägerplatten, die mit einer Umrandung eine Zelle bilden,
- einer in der Zelle befindlichen nematischen Flüssigkristallmischung mit positiver dielektrischer Anisotropie,
- Elektrodenschichten mit Orientierungsschichten auf den Innenseiten der Trägerplatten,
- einem Anstellwinkel zwischen der Längsachse der Moleküle an der Oberfläche der Trägerplatten und den Trägerplatten von 0 Grad bis 30 Grad, und
- einem Verdrillungswinkel der Flüssigkristallmischung in der Zelle von Orientierungsschicht zu Orientierungsschicht dem Betrag nach zwischen 22,5° und 600°,
- einer nematischen Flüssigkristallmischung bestehend aus

a) 15 - 80 Gew.% einer flüssigkristallinen Komponente A, bestehend aus einer oder mehreren Verbindungen mit einer dielektrischen Anisotropie von über +1,5;

b) 20 - 85 Gew.% einer flüssigkristallinen Komponente B, bestehend aus einer oder mehreren Verbindungen mit einer dielektrischen Anisotropie zwischen -1,5 und +1,5;

c) 0 - 20 Gew.% einer flüssigkristallinen Komponente D, bestehend aus einer oder mehreren Verbindungen mit einer dielektrischen Anisotropie von unter -1,5 und

d) gegebenenfalls einer optisch aktiven Komponente C in einer Menge, daß das Verhältnis zwischen Schichtdicke (Abstand der Trägerplatten) und natürlicher Ganghöhe der chiralen nematischen Flüssigkristallmischung etwa 0,2 bis 1,3 beträgt,

**dadurch gekennzeichnet, daß** die nematische Flüssigkristallmischung eine Flüssigkristallmischung nach einem der Ansprüche 1 bis 6 ist.

**9.** Cholesterische Flüssigkristallanzeige, SSCT- oder PSCT-Anzeige, enthaltend als optisch aktive Komponente einen oder mehrere chirale Dotierstoffe und als nematische Komponente eine Flüssigkristallmischung nach einem der Ansprüche 1 bis 6.

## Claims

1. Liquid-crystal mixture, **characterised in that** it comprises at least one compound of the formula I

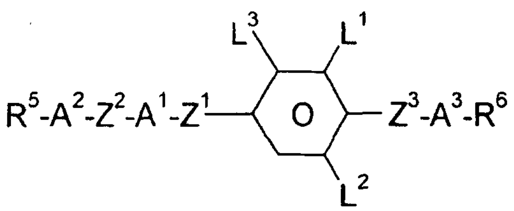

I

and at least one compound of the formula II and/or II*

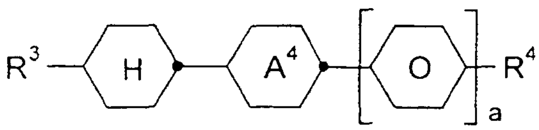

II

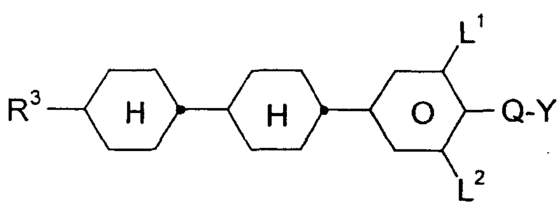

II*

in which

| | |
|---|---|
| $A^1$ | denotes trans-1,4-cyclohexylene, 1,4-phenylene, 3-fluoro-1,4-phenylene or 3,5-difluoro-1,4-phenylene, |
| $A^2$ and $A^3$ | each, independently of one another, denote one of the meanings of $A^1$ or a single bond, |
| $A^4$ | denotes 1,4-phenylene or trans-1,4-cyclohexylene, |
| $Z^1$ | denotes -CF=CF-, $-CR^0=CF-$ or $-CF=CR^0-$, |
| $Z^2$ and $Z^3$ | each, independently of one another, denote -O-, -COO-, -OCO-, $-CH_2O-$, $-OCH_2-$, $-CH_2CH_2-$, $-CF_2O-$, $-OCF_2-$, $-CF_2CF_2-$, -CH=CH-, -C≡C-, a single bond or one of the meanings of $Z^1$, |
| $R^0$ | denotes H or $CH_3$, |
| $R^3$ | denotes an alkenyl group having 2 to 7 C atoms, |
| $R^4$ | denotes an alkyl, alkoxy or alkenyl group having 1 to 12 C atoms, in which, in addition, one or two non-adjacent $CH_2$ groups may be replaced by -O-, -CH=CH-, -CO-, -OCO- or -COO- in such a way that O atoms are not linked directly to one another, |
| $R^5$ and $R^6$ | each, independently of one another, denote alkyl, alkoxy or alkenyl having 1 to 12 C atoms, in which, in addition, one or two non-adjacent $CH_2$ groups may be replaced by -O-, -CH=CH-, -CO-, -OCO- or -COO- in such a way that O atoms are not linked directly to one another, CN or -Q-Y, |

Q denotes $CF_2$, $OCF_2$, CFH, OCFH or a single bond,

Y denotes F or Cl,

$L^1$, $L^2$ and $L^3$ each, independently of one another, denote H or F, and

a denotes 0 or 1.

2. Liquid-crystal mixture according to Claim 1, **characterised in that** it comprises one or more compounds of the following formulae

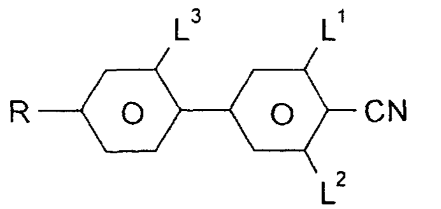

IIIa

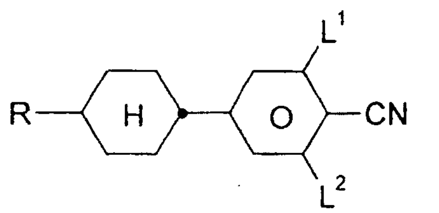

IIIb

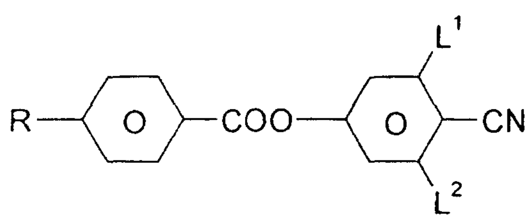

IIIc

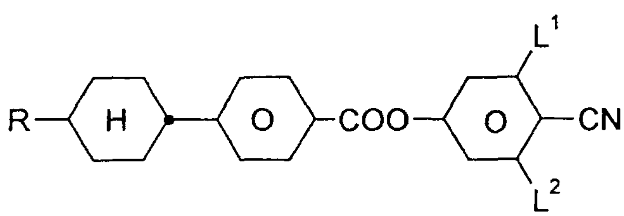

IIIf

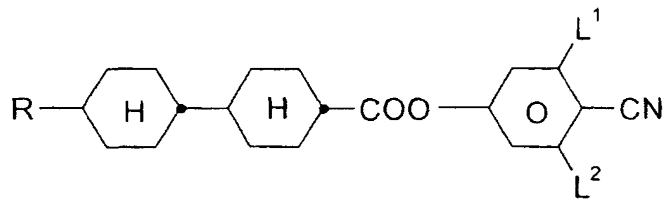

IIIh

in which

R denotes an alkyl, alkoxy or alkenyl group having 1 to 12 C atoms, in which, in addition, one or two non-adjacent $CH_2$ groups may be replaced by -O-, -CH=CH-, -CO-, -OCO- or -COO- in such a way that O atoms are not linked directly to one another, and

$L^1$ to $L^3$ each, independently of one another, denote H or F.

**3.** Liquid-crystal mixture according to one of Claims 1 and 2, **characterised in that** it comprises one or more compounds of the following formulae

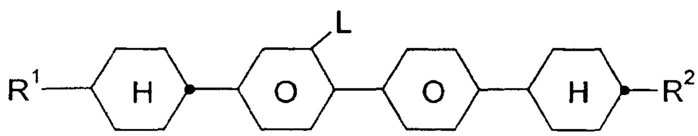

IV25

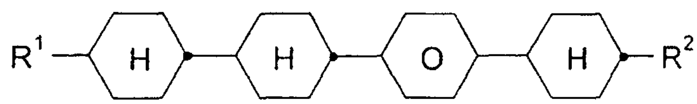

IV27

in which

$R^1$ and $R^2$ each, independently of one another, denote an alkyl, alkoxy or alkenyl group having 1 to 12 C atoms, in which, in addition, one or two non-adjacent $CH_2$ groups may be replaced by -O-, -CH=CH-, -CO-, -OCO- or -COO- in such a way that O atoms are not linked directly to one another, and

L denotes H or F.

**4.** Liquid-crystal mixture according to one of Claims 1 to 3, **characterised in that** it comprises at least one compound selected from the following formulae

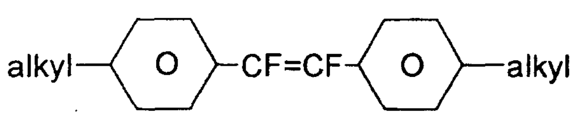

Ia

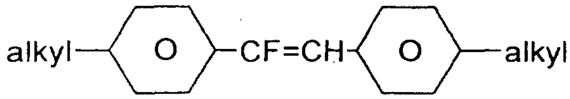

Ib

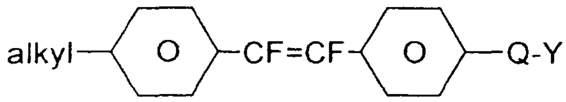

Ic

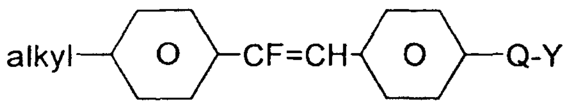

Id

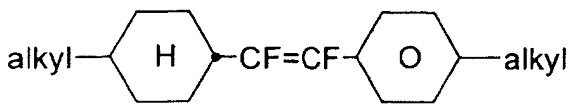

Ie

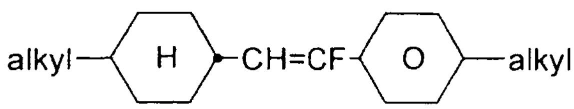

If

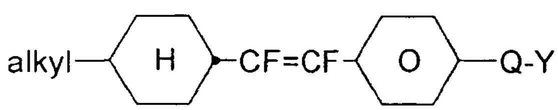

Ig

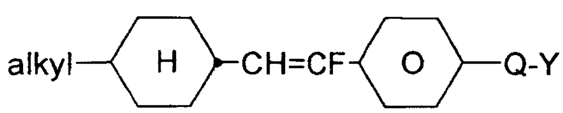

Ih

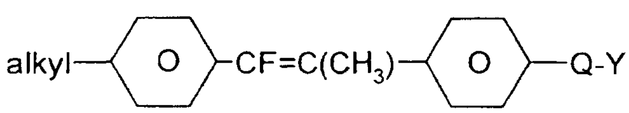

Ii

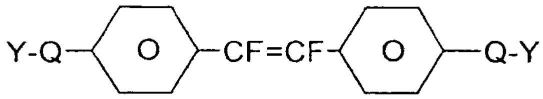

Ik

in which alkyl denotes an alkyl group having 1 to 8 C atoms, and Q-Y has the meaning indicated in the formula I.

**5.** Liquid-crystal mixture according to one of Claims 1 to 4, **characterised in that** it comprises one or more compounds selected from the following formulae

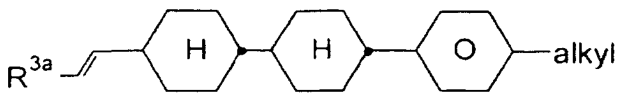

IIf

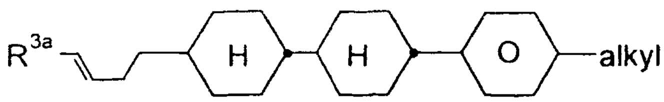

IIg

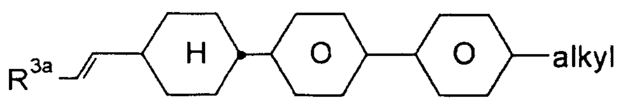

IIh

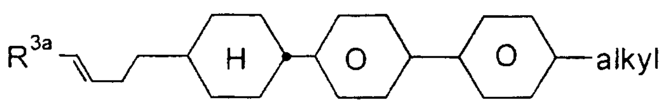

IIi

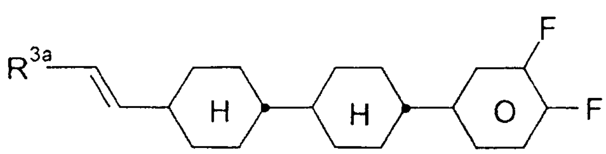

II*a

in which $R^{3a}$ and $R^{4a}$ each, independently of one another, denote H, $CH_3$, $C_2H_5$ or n-$C_3H_7$, and alkyl denotes an alkyl group having 1 to 8 C atoms.

**6.** Liquid-crystal mixture according to one of Claims 1 to 5, **characterised in that** it comprises 3 to 40% of one or more compounds of the formula I.

**7.** Liquid-crystal display containing a liquid-crystal mixture according to one of Claims 1 to 6.

**8.** TN or STN liquid-crystal display having

- two outer plates which, with a frame, form a cell,
- a nematic liquid-crystal mixture of positive dielectric anisotropy located in the cell,
- electrode layers with alignment layers on the insides of the outer plates,
- a tilt angle between the longitudinal axis of the molecules at the surface of the outer plates and the outer plates of from 0 degrees to 30 degrees, and
- a twist angle of the liquid-crystal mixture in the cell from alignment layer to alignment layer having a value of between 22.5° and 600°,
- a nematic liquid-crystal mixture consisting of

  a) 15 - 80% by weight of a liquid-crystalline component A, consisting of one or more compounds having a dielectric anisotropy of greater than +1.5;

  b) 20 - 85% by weight of a liquid-crystalline component B, consisting of one or more compounds having a dielectric anisotropy of between -1.5 and +1.5;

  c) 0 - 20% by weight of a liquid-crystalline component D, consisting of one or more compounds having a dielectric anisotropy of below -1.5 and

  d) optionally an optically active component C in such an amount that the ratio between the layer thickness (separation of the outer plates) and the natural pitch of the chiral nematic liquid-crystal mixture is from about 0.2 to 1.3,

**characterised in that** the nematic liquid-crystal mixture is a liquid-crystal mixture according to one of Claims 1 to 6.

9. Cholesteric liquid-crystal display, SSCT or PSCT display, containing, as optically active component, one or more chiral dopants and, as nematic component, a liquid-crystal mixture according to one of Claims 1 to 6.

## Revendications

1. Mélange de cristaux liquides, **caractérisé en ce qu'**il comprend au moins un composé de la formule I

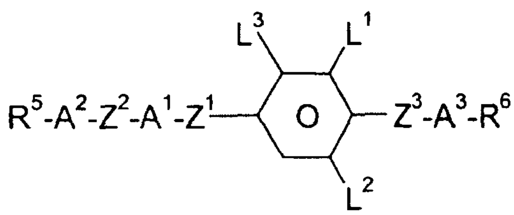

I

et au moins un composé de la formule II et/ou II*

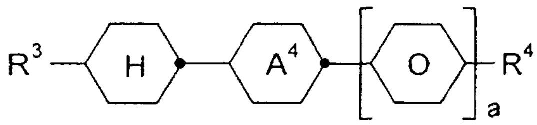

II

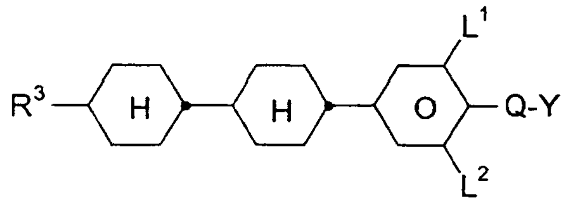

II*

dans lesquelles

- $A^1$ représente trans-1,4-cyclohexylène, 1,4-phénylène, 3-fluoro-1,4-phénylène ou 3,5-difluoro-1,4-phénylène,
- $A^2$ et $A^3$ chacun, indépendamment l'un de l'autre, représentent l'une des significations de $A^1$ ou une liaison simple,
- $A^4$ représente 1,4-phénylène ou trans-1,4-cyclohexylène,
- $Z^1$ représente -CF=CF-, $-CR^0=CF-$ ou $-CF=CR^0-$,
- $Z^2$ et $Z^3$ chacun, indépendamment l'un de l'autre, représentent -O-, -COO-, -OCO-, $-CH_2O-$, $-OCH_2-$, $-CH_2CH_2-$, $-CF_2O-$, $-OCF_2-$, $-CF_2CF_2-$, -CH=CH-, -C≡C-, une liaison simple ou une des significations de $Z^1$,
- $R^0$ représente H ou $CH_3$,
- $R^3$ représente un groupe alkényle ayant 2 à 7 atomes C,
- $R^4$ représente un groupe alkyle, alkoxy ou alkényle ayant 1 à 12 atomes C, dans lequel, en outre, un ou deux groupes $CH_2$ non adjacents peuvent être remplacés par -O-, -CH=CH-, -CO-, -OCO- ou -COO- de telle sorte que des atomes O ne soient pas liés directement les uns aux autres,
- $R^5$ et $R^6$ chacun, indépendamment l'un de l'autre, représentent alkyle, alkoxy ou alkényle ayant 1 à 12 atomes C, dans lequel, en outre, un ou deux groupes $CH_2$ non adjacents peuvent être remplacés par -O-, -CH=CH-, -CO-, -OCO- ou -COO- de telle sorte que des atomes O ne soient pas liés directement les uns aux autres, CN ou -Q-Y,
- Q représente $CF_2$, $OCF_2$, CFH, OCFH ou une liaison simple,
- Y représente F ou Cl,
- $L^1$, $L^2$ et $L^3$ chacun, indépendamment l'un de l'autre, représentent H ou F, et
- a représente 0 ou 1.

**2.** Mélange de cristaux liquides selon la revendication 1, **caractérisé en ce qu'**il comprend un ou plusieurs des composés des formules qui suivent

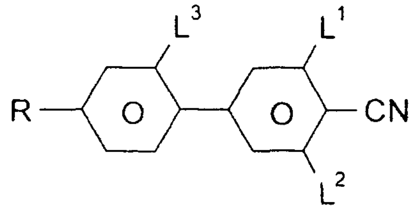

IIIa

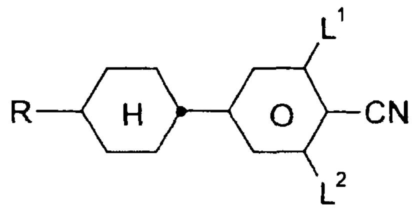

IIIb

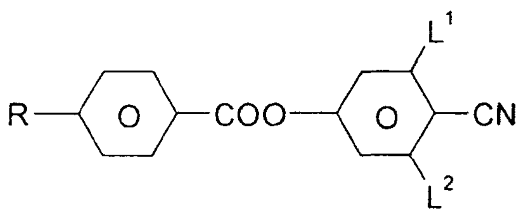

IIIc

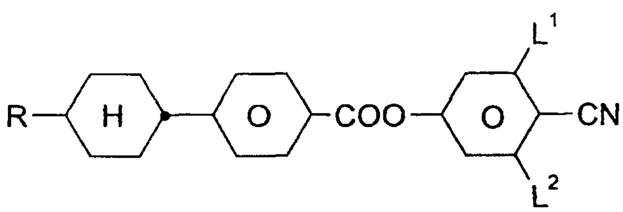

IIIf

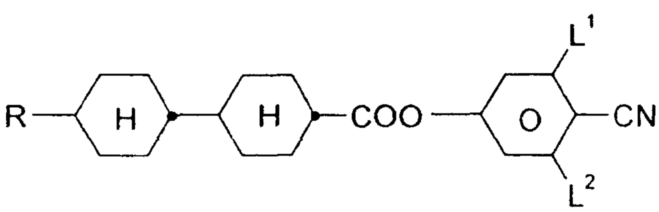

IIIh

dans lesquelles

R représente un groupes alkyle, alkoxy ou alkényle ayant 1 à 12 atomes C, dans lequel, en outre, un ou deux groupes $CH_2$ non adjacents peuvent être remplacés par -O-, -CH=CH-, -CO-, -OCO- ou -COO- de telle sorte que des atomes O ne soient pas liés directement les uns aux autres, et

$L^1$ à $L^3$ chacun, indépendamment l'un de l'autre, représentent H ou F.

3. Mélange de cristaux liquides selon l'une des revendications 1 et 2, **caractérisé en ce qu'**il comprend un ou plusieurs composés des formules qui suivent

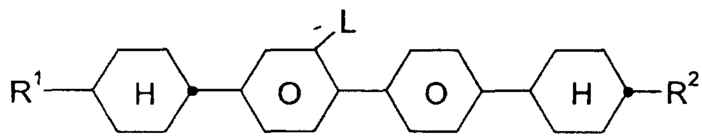

IV25

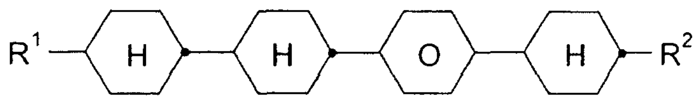

IV27

dans lesquelles

$R^1$ et $R^2$ chacun, indépendamment l'un de l'autre, représentent un groupe alkyle, alkoxy ou alkényle ayant 1 à 12 atomes C, dans lequel, en outre, un ou deux groupes $CH_2$ non adjacents peuvent être remplacés par -O-, -CH=CH-, -CO-, -OCO- ou -COO- de telle sorte que des atomes O ne soient pas liés directement les uns aux autres, et

L représente H ou F.

4. Mélange de cristaux liquides selon l'une des revendications 1 à 3, **caractérisé en ce qu'**il comprend au moins un composé choisi parmi les formules qui suivent

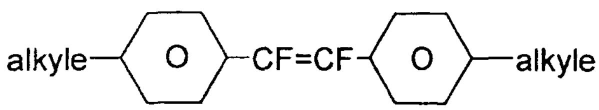

Ia

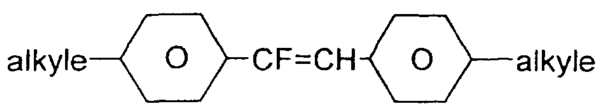

Ib

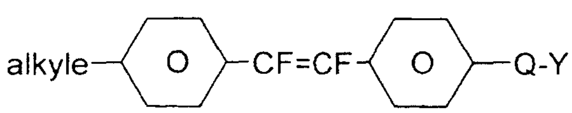

Ic

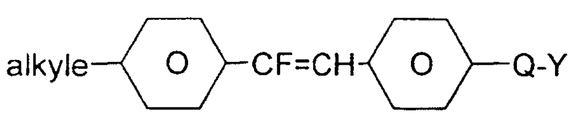

Id

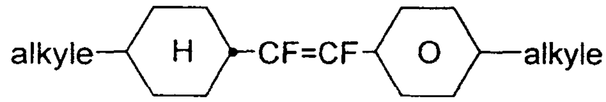

Ie

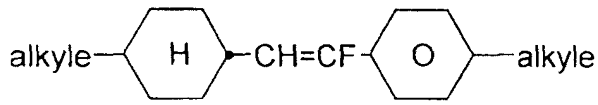

If

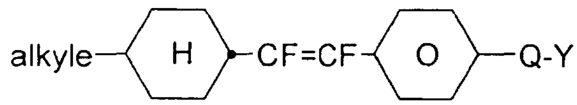

Ig

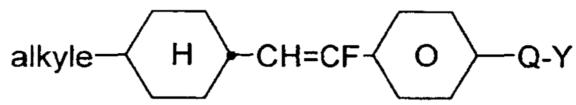

Ih

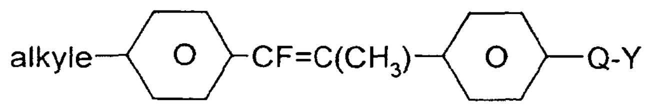

Ii

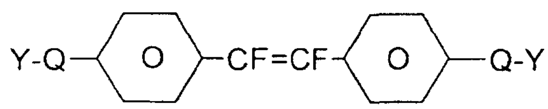

Ik

dans lesquelles alkyle représente un groupe alkyle ayant 1 à 8 atomes C, et Q-Y présente la signification indiquée dans la formule I.

**5.** Mélange de cristaux liquides selon l'une des revendications 1 à 4, **caractérisé en ce qu'**il comprend un ou plusieurs composés choisis parmi les formules qui suivent

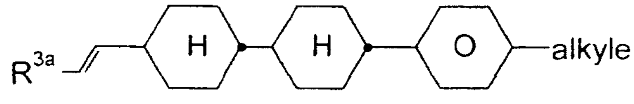

IIf

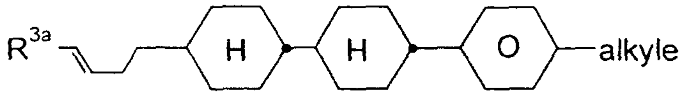

IIg

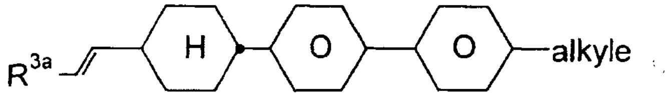

IIh

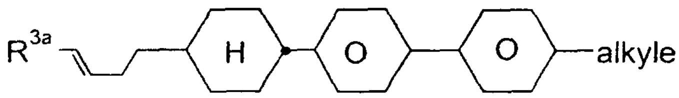

IIi

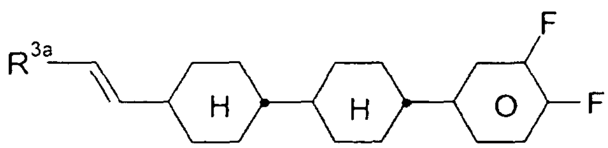

II*a

dans lesquelles $R^{3a}$ et $R^{4a}$ chacun, indépendamment l'un de l'autre, représentent H, $CH_3$, $C_2H_5$ ou n-$C_3H_7$, et alkyle représente un groupe alkyle ayant 1 à 8 atomes C.

**6.** Mélange de cristaux liquides selon l'une des revendications 1 à 5, **caractérisé en ce qu'**il comprend 3 à 40% d'un ou plusieurs composés de la formule I.

**7.** Affichage à cristaux liquides comprenant un mélange de cristaux liquides selon l'une des revendications 1 à 6.

**8.** Affichage à cristaux liquides TN ou STN ayant

- deux plaques externes qui, avec un cadre, forment un cellule,
- un mélange de cristaux liquides nématiques d'anisotropie diélectrique positive situé dans la cellule,
- des couches d'électrode avec des couches d'alignement sur les intérieurs des plaques externes,
- un angle d'inclinaison entre l'axe longitudinal des molécules au niveau de la surface des plaques externes et les plaques externes de 0 degré à 30 degrés, et
- un angle d'inclinaison du mélange de cristaux liquides dans la cellule d'une couche d'alignement à une couche d'alignement ayant une valeur entre 22,5° et 600°,
- un mélange de cristaux liquides nématiques constitué par

  a) 15 - 80% en poids d'un composant A de cristal liquide, constitué par un ou plusieurs composés ayant une anisotropie diélectrique supérieure à +1,5;

  b) 20 - 85% en poids d'un composant B de cristal liquide, constitué par un ou plusieurs composés ayant une anisotropie diélectrique comprise entre -1,5 et +1,5;

c) 0 - 20% en poids d'un composant D de cristal liquide, constitué par un ou plusieurs composés ayant une anisotropie diélectrique inférieure à -1,5 et

d) optionnellement un composant C actif optiquement d'une quantité telle que le rapport entre l'épaisseur de couche (séparation des plaques externes) et le pas naturel du mélange de cristaux liquides nématiques chiraux est d'environ 0,2 à 1,3,

**caractérisé en ce que** le mélange de cristaux liquides nématiques est a mélange de cristaux liquides selon l'une des revendications 1 à 6.

**9.** Affichage à cristaux liquides cholestériques, affichage SSCT ou PSCT, contenant, en tant que composant actif optiquement, un ou plusieurs dopants chiraux et, en tant que composant nématique, un mélange de cristaux liquides selon l'une des revendications 1 à 6.